# EUROPÄISCHE PATENTANMELDUNG

(11) **EP 4 847 180 A1**
(43) Veröffentlichungstag der Anmeldung: **02.12.2026**
(21) Anmeldenummer: 25179097.8
(22) Anmeldetag: 27.05.2025
(51) Int. Cl.: B23K 9/10, B23K 9/173, B23K 9/18

(54) **SCHWEISSSTROMQUELLE ZUM METALLSCHUTZGASSCHWEISSEN UND UNTERPULVERSCHWEISSEN**

(71) Anmelder: EWM GmbH, 56271 Mündersbach (DE)
(72) Erfinder: Lautenbach, Max, 56244 Leuterod (DE); Hartke, Martin, 56299 Ochtendung (DE)
(74) Vertreter: Cohausz & Florack

(57) **Zusammenfassung**

Die Erfindung betrifft eine Schweißstromquelle (110, 210, 310, 410) zum Lichtbogenschweißen mit abschmelzender Elektrode (145, 245, 345), mit einem Leistungsteil (112, 212, 312, 412), das zur Bereitstellung eines Ausgangsstroms zum Lichtbogenschweißen eingerichtet ist, und mit einer Steuereinrichtung (114, 214, 314, 414), die zur Steuerung der Schweißstromquelle (110, 210, 310, 410) eingerichtet ist, wobei die Schweißstromquelle (110, 210, 310, 410) eine MSG-Schnittstelle (120, 220, 320) zum Anschließen von MSG-Peripherie (140, 240, 340) zum Metallschutzgasschweißen und eine UP-Schnittstelle (121, 221, 321) zum Anschließen von UP-Peripherie (160, 260, 360) zum Unterpulverschweißen aufweist, wobei die Schweißstromquelle (110, 210, 310, 410) eine Metallschutzgasschweißfunktion und eine Unterpulverschweißfunktion zur Verfügung stellt, zwischen denen die Schweißstromquelle (110, 210, 310, 410) umschaltbar ist, und wobei die Steuereinrichtung (114, 214, 314, 414) für die Metallschutzgasschweißfunktion dazu eingerichtet ist, die Schweißstromquelle (110, 210, 310, 410) derart zu steuern, dass unter Verwendung des Leistungsteils (112, 212, 312, 412) ein Ausgangsstrom zum Metallschutzgasschweißen über die MSG-Schnittstelle (120, 220, 320) bereitgestellt wird, und für die Unterpulverschweißfunktion dazu eingerichtet ist, die Schweißstromquelle (110, 210, 310, 410) derart zu steuern, dass unter Verwendung des Leistungsteils (112, 212, 312, 412) ein Ausgangsstrom zum Unterpulverschweißen über die UP-Schnittstelle (121, 221, 321) bereitgestellt wird. Weiter betrifft die Erfindung ein Schweißsystem (100, 200, 300) und ein Schweißverfahren.

## Beschreibung

Die vorliegende Erfindung betrifft eine Schweißstromquelle zum Lichtbogenschweißen mit abschmelzender Elektrode, mit einem Leistungsteil, das zur Bereitstellung eines Ausgangsstroms zum Lichtbogenschweißen eingerichtet ist, und mit einer Steuereinrichtung, die zur Steuerung der Schweißstromquelle eingerichtet ist. Die vorliegende Erfindung betrifft weiter ein Schweißsystem mit einer solchen Schweißstromquelle sowie ein Schweißverfahren.

Schweißstromquellen zum Lichtbogenschweißen mit abschmelzender Elektrode sind aus dem Stand der Technik zum einen für das Metallschutzgasschweißen und zum anderen für das Unterpulverschweißen (engl. Submerged Arc Welding - SAW) bekannt.

Beim Metallschutzgasschweißen, insbesondere Metallinertgasschweißen (MIG-Schweißen) oder Metallaktivgasschweißen (MAG-Schweißen), werden die aus dem Schweißbrenner austretende abschmelzende Elektrode und das Schweißbad mit einem Schutzgas umströmt. Die Schutzgaszuführung ist in aller Regel in den Schweißbrenner integriert. Beim Unterpulverschweißen wird das Schweißbad von einer Schicht aus Granulat bedeckt, typischerweise grobkörnigem mineralischem Granulat. Zur Zuführung des Granulats ist typischerweise ein UP-Schweißkopf mit Granulatzuführung vorgesehen, wobei aus dem Schweißkopf die abschmelzende Elektrode und ein die Elektrode umgebender Granulatstrom austritt. Der Lichtbogen brennt dann typischerweise in einer vom Granulat gebildeten Kaverne und ist dadurch nach außen abgeschirmt, insbesondere von außen nicht sichtbar.

Schweißstromquellen zum Unterpulverschweißen (UP-Schweißstromquellen) sind teilweise auch dazu in der Lage, Kennlinien für das MSG-Schweißen bereitzustellen. Um mit einer solchen UP-Schweißstromquelle ein Unterpulverschweißen oder Metallschutzgasschweißen durchzuführen, muss an die Peripherie-Schnittstelle der UP-Schweißstromquelle die jeweils erforderliche Peripherie angeschlossen werden, das heißt eine Drahtvorschubeinrichtung mit einem Schweißbrenner für das MSG-Schweißen bzw. eine Drahtvorschubeinrichtung mit UP-Schweißkopf für das UP-Schweißen.

In der Schweißtechnik kommt es vor, dass verschiedene Schweißverfahren an einer Schweißnaht einzusetzen sind, beispielsweise das MSG-Schweißen für die Wurzellage einer Schweißnaht und das UP-Schweißen für die Decklagen. Bei den bekannten UP-Schweißstromquellen ist zum Wechsel der Schweißverfahren ein zeitaufwändiger Umbau der Peripherie, insbesondere ein Umstecken von Verbindungskabeln bzw. Verbindungsanschlüssen zwischen Schweißstromquelle und einem oder mehreren weiteren Peripheriegeräten, wie zum Beispiel einer Drahtvorschubeinrichtung, einer zugehörigen Ansteuerung, einer Nutzerschnittstelle und/oder anderen Hardware-Komponenten, beispielsweise zur Förderung des Drahts entsprechend einer Kennlinie, erforderlich. Alternativ kann neben der UP-Schweißstromquelle eine zweite Stromquelle für das MSG-Schweißen bereitgestellt werden, wodurch sich jedoch der apparative Aufwand erhöht.

Es sind weiter MSG-Schweißstromquellen bekannt, an die gleichzeitig zwei Drahtvorschubeinrichtungen mit jeweiligem Schweißbrenner zum MSG-Schweißen angeschlossen werden können. Auf diese Weise kann beispielsweise zwischen zwei unterschiedlichen Werkstoffen für die abschmelzbare Elektrode gewechselt werden oder es können ein automatisierter Schweißbrenner und ein Schweißbrenner zum manuellen Handschweißen an einer Schweißstromquelle angeschlossen werden. Diese MSG-Schweißstromquellen sind jedoch nicht zum UP-Schweißen geeignet.

Vor diesem Hintergrund liegt der vorliegenden Erfindung die Aufgabe zu Grunde, eine Schweißstromquelle zur Verfügung zu stellen, die ein flexibleres Unterpulverschweißen ermöglicht.

Die zuvor genannte Aufgabe wird erfindungsgemäß gelöst durch eine Schweißstromquelle zum Lichtbogenschweißen mit abschmelzender Elektrode, mit einem Leistungsteil, das zur Bereitstellung eines Ausgangsstroms zum Lichtbogenschweißen eingerichtet ist, und mit einer Steuereinrichtung, die zur Steuerung der Schweißstromquelle eingerichtet ist, wobei die Schweißstromquelle eine MSG-Schnittstelle zum Anschließen von MSG-Peripherie zum Metallschutzgasschweißen (nachfolgend: MSG-Schweißen) und eine UP-Schnittstelle zum Anschließen von UP-Peripherie zum Unterpulverschweißen (nachfolgend: UP-Schweißen) aufweist, wobei die Schweißstromquelle eine Metallschutzgasschweißfunktion (nachfolgend: MSG-Schweißfunktion) und eine Unterpulverschweißfunktion (nachfolgend: UP-Schweißfunktion) zur Verfügung stellt, zwischen denen die Schweißstromquelle umschaltbar ist, und wobei die Steuereinrichtung für die MSG-Schweißfunktion dazu eingerichtet ist, die Schweißstromquelle derart zu steuern, dass unter Verwendung des Leistungsteils ein Ausgangsstrom zum MSG-Schweißen über die MSG-Schnittstelle bereitgestellt wird, und für die UP-Schweißfunktion dazu eingerichtet ist, die Schweißstromquelle derart zu steuern, dass unter Verwendung des Leistungsteils ein Ausgangsstrom zum UP-Schweißen über die UP-Schnittstelle bereitgestellt wird.

Auf diese Weise können an der Schweißstromquelle gleichzeitig sowohl die zum MSG-Schweißen notwendige MSG-Peripherie, insbesondere ein Drahtvorschubgerät mit einem angeschlossenen Schweißbrenner, über die MSG-Schnittstelle als auch die zum UP-Schweißen notwendige UP-Peripherie, insbesondere ein Drahtvorschubgerät mit angeschlossenem UP-Schweißkopf, über die UP-Schnittstelle angeschlossen sein, und der Nutzer kann entsprechend durch Umschalten der Schweißstromquelle zwischen MSG-Schweißfunktion und UP-Schweißfunktion für den nächsten Schweißvorgang die gewünschte Schweißart auswählen, ohne dass dafür ein Umbau der Peripherie oder ein Umstecken ein oder mehrerer Leitungen, insbesondere Schweißstrom- und/oder Steuerleitungen, vorgenommen werden muss.

Auf diese Weise kann der Nutzer beide Schweißarten mit geringem apparativem Aufwand und ohne Umbauaufwand bedarfsgemäß einsetzen, wodurch sich Produktivitätsvorteile ergeben. Beispielsweise kann der Nutzer vor dem UP-Schweißen einer Naht mit derselben Schweißstromquelle, insbesondere manuell, eine Heftschweißung oder eine Wurzellagenschweißung mittels MSG-Schweißens durchführen.

Die Schweißstromquelle umfasst ein Leistungsteil, das zur Bereitstellung eines Ausgangsstroms zum Lichtbogenschweißen eingerichtet ist. Das Leistungsteil kann insbesondere Leistungselektronik aufweisen, die einen Eingangsstrom von einem Netzanschluss der Schweißstromquelle, zum Beispiel Dreiphasenwechselstrom, in einen Ausgangsstrom zum Lichtbogenschweißen umwandelt.

Die Schweißstromquelle umfasst eine Steuereinrichtung, die zur Steuerung der Schweißstromquelle eingerichtet ist. Die Steuereinrichtung umfasst vorzugsweise mindestens einen Mikroprozessor und mindestens einen Speicher mit Befehlen, deren Ausführung auf dem mindestens einen Mikroprozessor die Steuerung der Schweißstromquelle bewirkt. Die Steuereinrichtung kann mehrere Teilsteuereinheiten aufweisen, die zusammen die Steuereinrichtung der Schweißstromquelle bilden.

Die Schweißstromquelle weist eine MSG-Schnittstelle zum Anschließen von MSG-Peripherie zum MSG-Schweißen auf.

Die MSG-Schnittstelle der Schweißstromquelle umfasst vorzugsweise einen Anschluss für eine Drahtvorschubeinrichtung der MSG-Peripherie. Eine Drahtvorschubeinrichtung dient zur Förderung des Schweißdrahts zum Schweißbrenner, insbesondere mit einer steuerbaren Drahtvorschubgeschwindigkeit.

Der Anschluss für die Drahtvorschubeinrichtung weist vorzugsweise ein Steckverbindungsteil auf, beispielsweise eine Buchse, so dass ein korrespondierendes Steckverbindungsteil, beispielsweise ein Stecker, einer Verbindungsleitung zu einer Drahtvorschubeinrichtung der MSG-Peripherie mit der MSG-Schnittstelle verbunden werden kann.

Die MSG-Schnittstelle kann darüber hinaus noch ein oder mehrere weitere Anschlüsse zum Anschluss ein oder mehrerer weiterer Komponenten der MSG-Peripherie umfassen, vorzugsweise mit einem jeweiligen Steckverbindungsteil. Beispielsweise kann die MSG-Schnittstelle einen Anschluss für eine Schweißrauchabsaugeinrichtung der MSG-Peripherie aufweisen, über den Steuersignale für die Schweißrauchabsaugeinrichtung ausgegeben werden können. Weiterhin ist es auch denkbar, dass Steuersignale für die Schweißrauchabsaugeinrichtung über den Anschluss für die Drahtvorschubeinrichtung ausgegeben werden, zum Beispiel wenn die Schweißrauchabsaugeinrichtung an die Drahtvorschubeinrichtung angeschlossen oder darin integriert ist. Weiter kann die MSG-Schnittstelle einen Anschluss für einen Schweißroboter aufweisen, der zum Beispiel beim automatisierten MSG-Schweißen den Schweißbrenner der MSG-Peripherie führen kann.

Die Steuereinrichtung ist für die MSG-Schweißfunktion entsprechend vorzugsweise dazu eingerichtet, über die MSG-Schnittstelle Steuersignale zur Steuerung weiterer Komponenten der MSG-Peripherie, insbesondere einer Schweißrauchabsaugeinrichtung, einer Schutzgassteuerung, einer Drahtvorschubeinrichtung und/oder eines Schweißroboters, auszugeben.

Die MSG-Peripherie kann auch eine externe Nutzereingabestelle umfassen. Entsprechend kann die MSG-Schnittstelle auch einen Anschluss zum Anschließen einer externen Nutzereingabestelle aufweisen und die Steuereinrichtung kann für die MSG-Schweißfunktion dazu eingerichtet sein, Steuerbefehle über den Anschluss zum Anschließen der externen Nutzereingabestelle zu empfangen und die Schweißstromquelle als Funktion der empfangenen Steuerbefehle zu steuern.

Mehrere Anschlüsse der MSG-Schnittstelle können beispielsweise zu einem Multi-Anschluss zum Anschluss eines Leitungspakets, beispielsweise Schlauchpakets, mit mehreren Leitungen zum Anschluss an die jeweiligen Anschlüsse zusammengefasst sein. Ein Beispiel für einen solchen Multi-Anschluss ist der Eurozentralanschluss, der Anschlüsse für den Ausgangsstrom zum Lichtbogenschweißen, ein Brennertaster-Signal, ein Schutzgas und einen Schweißzusatz (Schweißdraht) umfasst. Zusätzlich oder alternativ können mehrere Anschlüsse der MSG-Schnittstelle auch separat voneinander zum Anschluss separater Leitungen ausgebildet sein.

Die Schweißstromquelle weist weiter eine UP-Schnittstelle zum Anschließen von UP-Peripherie zum UP-Schweißen auf.

Die UP-Schnittstelle der Schweißstromquelle umfasst vorzugsweise einen Anschluss für eine Drahtvorschubeinrichtung der UP-Peripherie. Der Anschluss für die Drahtvorschubeinrichtung weist vorzugsweise ein Steckverbindungsteil auf, beispielsweise eine Buchse, so dass ein korrespondierendes Steckverbindungsteil, beispielsweise ein Stecker, einer Verbindungsleitung zu einer Drahtvorschubeinrichtung der UP-Peripherie mit der UP-Schnittstelle verbunden werden kann.

Die UP-Schnittstelle kann darüber hinaus noch ein oder mehrere weitere Anschlüsse zum Anschluss ein oder mehrerer weiterer Komponenten der UP-Peripherie umfassen, vorzugsweise mit einem jeweiligen Steckverbindungsteil. Beispielsweise kann die UP-Schnittstelle einen Anschluss für eine Granulatzuführung der UP-Peripherie aufweisen, über den Steuersignale für eine Granulatzuführung der UP-Peripherie ausgegeben werden können. Weiterhin kann die UP-Schnittstelle einen Anschluss für eine Bewegungseinheit der UP-Peripherie aufweisen, über den Steuersignale für eine Bewegungseinheit der UP-Peripherie ausgegeben werden können. Weiterhin ist es auch denkbar, dass Steuersignale für die Granulatzuführung und/oder für die Bewegungseinheit über den Anschluss für die Drahtvorschubeinrichtung ausgegeben werden, zum Beispiel wenn die Granulatzuführung und/oder die Bewegungseinheit an die Drahtvorschubeinrichtung angeschlossen sind.

Mehrere Anschlüsse der UP-Schnittstelle können beispielsweise zu einem Multi-Anschluss zum Anschluss eines Leitungspakets, beispielsweise Schlauchpakets, mit mehreren Leitungen zum Anschluss an die jeweiligen Anschlüsse zusammengefasst sein. Zusätzlich oder alternativ können mehrere Anschlüsse der UP-Schnittstelle auch separat voneinander zum Anschluss separater Leitungen ausgebildet sein.

Die Steuereinrichtung ist für die UP-Schweißfunktion entsprechend vorzugsweise dazu eingerichtet, über die UP-Schnittstelle Steuersignale zur Steuerung weiterer Komponenten der UP-Peripherie, insbesondere der Granulatzuführung und/oder der Bewegungseinheit, auszugeben.

Die UP-Peripherie kann auch eine externe Nutzereingabestelle umfassen. Entsprechend kann die UP-Schnittstelle auch einen Anschluss zum Anschließen einer externen Nutzereingabestelle aufweisen und die Steuereinrichtung kann für die UP-Schweißfunktion dazu eingerichtet sein, Steuerbefehle über den Anschluss zum Anschließen der externen Nutzereingabestelle zu empfangen und die Schweißstromquelle als Funktion der empfangenen Steuerbefehle zu steuern.

Durch das Vorsehen zweier separater Schnittstellen, nämlich der MSG-Schnittstelle und der UP-Schnittstelle, können Komponenten der MSG-Peripherie, insbesondere eine Drahtvorschubeinrichtung der MSG-Peripherie, und Komponenten der UP-Peripherie, insbesondere eine Drahtvorschubeinrichtung der UP-Peripherie, gleichzeitig mit der Schweißstromquelle verbunden werden.

Die Schweißstromquelle stellt eine MSG-Schweißfunktion und eine UP-Schweißfunktion zur Verfügung, zwischen denen die Schweißstromquelle umschaltbar ist. Auf diese Weise kann die Schweißstromquelle, je nachdem ob die Schweißstromquelle auf die MSG-Schweißfunktion oder die UP-Schweißfunktion geschaltet ist, entweder einen Metallschutzgasschweißvorgang oder einen Unterpulverschweißvorgang versorgen. Durch das Umschalten befindet sich die Schweißstromquelle für die jeweilige Schweißfunktion in einem klar definierten Zustand, so dass es zu keinen gegenseitigen Störungen der Prozesssteuerung für MSG- und die UP-Schweißfunktion kommen kann. Das Umschalten kann beispielsweise manuell durch eine Nutzereingabe über eine Nutzerschnittstelle und/oder automatisiert, zum Beispiel im Rahmen einer vorgegebenen Schweißabfolge oder durch externe Befehle einer externen Steuerung, erfolgen.

Auf einem Speicher der Steuereinrichtung kann insbesondere eine Statusvariable gespeichert sein, deren Wert anzeigt, ob die Schweißstromquelle auf die MSG-Schweißfunktion oder die UP-Schweißfunktion geschaltet ist. Das Umschalten der Schweißstromquelle zwischen der MSG-Schweißfunktion in die UP-Schweißfunktion kann insbesondere ein Setzen der Statusvariablen umfassen. Auf diese Weise kann vorzugsweise insbesondere verhindert werden, dass bei der Anwahl der MSG-Schweißfunktion Regelalgorithmen für das UP-Schweißen angewendet werden können und umgekehrt.

Die Schweißstromquelle weist vorzugsweise eine Nutzerschnittstelle auf, über die der Nutzer Nutzereingaben tätigen, beispielsweise Einstellungen an der Schweißstromquelle vornehmen, und/oder Nutzerausgaben erhalten, beispielsweise Informationen ablesen, kann. Die Nutzerschnittstelle kann zum Beispiel einen Bildschirm, beispielsweise Touchdisplay, und/oder ein oder mehrere Leuchtelemente, insbesondere LEDs, und/oder ein oder mehrere Schaltelemente, beispielsweise Taster, Drehknöpfe oder Schalter, aufweisen. Die Nutzerschnittstelle wird insbesondere von der Steuereinrichtung gesteuert, so dass die Steuereinrichtung die Ausgabe von Nutzerausgaben über die Nutzerschnittstelle bewirken und/oder Nutzereingaben über die Nutzerschnittstelle empfangen kann.

Damit der Nutzer unmittelbar erkennen kann, ob die Schweißstromquelle auf die MSG-Schweißfunktion oder auf die UP-Schweißfunktion geschaltet ist, bewirkt die Steuereinrichtung vorzugsweise die Ausgabe einer der MSG-Schweißfunktion zugeordneten Nutzerausgabe, wenn die Schweißstromquelle auf die MSG-Schweißfunktion geschaltet ist, und/oder eine der UP-Schweißfunktion zugeordneten Nutzerausgabe, wenn die Schweißstromquelle auf die UP-Schweißfunktion geschaltet ist. Beispielsweise kann die Steuereinrichtung die auf einem Bildschirm der Nutzerschnittstelle dargestellten Informationen und/oder deren Layout oder Farbgebung abhängig davon einstellen, ob die Schweißstromquelle auf die MSG-Schweißfunktion oder die UP-Schweißfunktion geschaltet ist. Auf diese Weise können zum Beispiel die für die jeweilige Schweißfunktion relevanten Merkmale und/oder Parameter auf dem Bildschirm hervorgehoben werden. Zudem kann der Nutzer auf diese Weise unmittelbar erkennen, auf welche Schweißfunktion die Schweißstromquelle geschaltet ist.

Die Steuereinrichtung ist für die MSG-Schweißfunktion dazu eingerichtet, die Schweißstromquelle derart zu steuern, dass unter Verwendung des Leistungsteils ein Ausgangsstrom zum MSG-Schweißen (MSG-Schweißstrom) über die MSG-Schnittstelle bereitgestellt wird. Auf diese Weise kann das Leistungsteil, wenn die Schweißstromquelle auf die MSG-Schweißfunktion geschaltet ist, einen Metallschutzgasschweißvorgang mit der an der MSG-Schnittstelle angeschlossenen MSG-Peripherie für das MSG-Schweißen versorgen, so dass mit der an der MSG-Schnittstelle angeschlossenen MSG-Peripherie, insbesondere Drahtvorschubgerät und Schweißbrenner, ein Metallschutzgasvorgang durchgeführt werden kann.

Die Steuereinrichtung ist für die UP-Schweißfunktion dazu eingerichtet, die Schweißstromquelle derart zu steuern, dass unter Verwendung des Leistungsteils ein Ausgangsstrom zum UP-Schweißen (UP-Schweißstrom) über die UP-Schnittstelle bereitgestellt wird. Auf diese Weise kann das Leistungsteil, wenn die Schweißstromquelle auf die UP-Schweißfunktion geschaltet ist, einen Unterpulverschweißvorgang mit der an der UP-Schnittstelle angeschlossenen UP-Peripherie für das UP-Schweißen versorgen, so dass mit der an die UP-Schnittstelle angeschlossenen UP-Peripherie, insbesondere Drahtvorschubgerät und UP-Schweißkopf, ein Unterpulverschweißvorgang durchgeführt werden kann.

Die Anschlüsse der MSG-Schnittstelle und der UP-Schnittstelle zur Bereitstellung des jeweiligen Ausgangsstroms können auf verschiedenen Potentialen liegen, insbesondere galvanisch voneinander getrennt sein. Auf diese Weise kann beispielsweise der entsprechende Ausgang der MSG-Schnittstelle potentialfrei geschaltet werden, wenn die Schweißstromquelle auf die UP-Schweißfunktion geschaltet ist, und/oder der entsprechende Ausgang der UP-Schnittstelle potentialfrei geschaltet werden, wenn die Schweißstromquelle auf die MSG-Schweißfunktion geschaltet ist. Auf diese Weise kann die Betriebssicherheit erhöht werden. Insbesondere kann die Steuereinrichtung dazu eingerichtet sein, beim Umschalten von der MSG-Schweißfunktion zur UP-Schweißfunktion zu bewirken, dass die Ausgangsspannungs-Versorgung vom Leistungsteil von der MSG-Schnittstelle zur UP-Schnittstelle umgeschaltet wird. Auf diese Weise liegt die Ausgangsspannung an der UP-Schnittstelle, nicht aber an der MSG-Schnittstelle an, wenn die Schweißstromquelle auf die UP-Schweißfunktion geschaltet ist. Zusätzlich oder alternativ kann die Steuereinrichtung dazu eingerichtet sein, beim Umschalten von der UP-Schweißfunktion zur MSG-Schweißfunktion zu bewirken, dass die Ausgangsspannungs-Versorgung vom Leistungsteil von der UP-Schnittstelle zur MSG-Schnittstelle umgeschaltet wird. Auf diese Weise liegt die Ausgangsspannung an der MSG-Schnittstelle, nicht aber an der UP-Schnittstelle an, wenn die Schweißstromquelle auf die MSG-Schweißfunktion geschaltet ist. Auf diese Wiese liegt die Ausgangsspannung immer nur an einer von der MSG-Peripherie und der UP-Peripherie an.

Alternativ können die Anschlüsse der MSG-Schnittstelle und der UP-Schnittstelle zur Bereitstellung des jeweiligen Ausgangsstroms auch auf demselben Potential liegen. In diesem Fall werden die MSG-Peripherie bzw. die UP-Peripherie vorzugsweise derart angesteuert, dass die Drahtelektrode lediglich von der Drahtvorschubeinrichtung der MSG-Peripherie gefördert wird, wenn die Schweißstromquelle auf die MSG-Schweißfunktion geschaltet ist, und lediglich von der Drahtvorschubeinrichtung der UP-Peripherie gefördert wird, wenn die Schweißstromquelle auf die UP-Schweißfunktion geschaltet ist. Auf diese Weise kann zwar während eines MSG-Schweißvorgangs eine Spannung an der Drahtelektrode am UP-Schweißkopf anliegen bzw. während eines UP-Schweißvorgangs eine Spannung an der Drahtelektrode am Schweißbrenner der MSG-Peripherie anliegen; da dort jedoch keine Förderung der Drahtelektrode erfolgt bzw. die Drahtelektrode in den UP-Schweißkopf bzw. den Schweißbrenner zurückgezogen ist, wird dennoch eine hohe Betriebssicherheit erreicht.

Insbesondere bewirkt die Steuereinrichtung vorzugsweise eine Deaktivierung der MSG-Peripherie, wenn die Schweißstromquelle auf die UP-Schweißfunktion geschaltet ist oder wird, und/oder eine Deaktivierung der UP-Peripherie, wenn die Schweißstromquelle auf die MSG-Schweißfunktion geschaltet ist oder wird. Die Deaktivierung der MSG-Peripherie bzw. der UP-Peripherie wird vorzugsweise über die Nutzerschnittstelle ausgegeben, vorzugsweise auf einem Bildschirm der Nutzerschnittstelle angezeigt.

Für einen zusätzlichen Schutz kann beispielsweise vorgesehen sein, dass, wenn die Schweißstromquelle auf die UP-Schweißfunktion geschaltet ist, die Ausgabe einer Ausgangsspannung und/oder eine Ansteuerung der UP-Peripherie abhängig vom Empfang eines UP-Freigabesignals erfolgt. Beispielsweise kann eine Schweißbrenner-Ablagevorrichtung vorgesehen sein, in die der Schweißbrenner ablegbar, beispielsweise einhängbar, ist, wobei die Ablagevorrichtung vorzugsweise einen Berührschutz zum Schutz vor einem versehentlichen Berühren des vorderen Endes eines in der Ablagevorrichtung abgelegten Schweißbrenners aufweist. Die Schweißbrenner-Ablagevorrichtung kann beispielsweise mit einem Taster ausgestattet sein, dessen Betätigung ein UP-Freigabesignal an die Schweißstromquelle übermittelt. Auf diese Weise kann eine versehentliche Berührung des vorderen Endes des Schweißbrenners vermieden werden, wenn an diesem die Ausgangsspannung für einen UP-Schweißvorgang anliegt.

Vorzugsweise kann die Steuereinrichtung bei vorgegebenen Schweißsequenzen mit mindestens einem MSG-Schweißvorgang, beispielsweise einer Wurzellage einer Schweißnaht, und mindestens einem UP-Schweißvorgang, beispielsweise ein oder mehreren Decklagen über der Wurzellage, prüfen, ob die für die jeweiligen Schweißprozesse eingestellten Parameter, beispielsweise Kennlinien und/oder Materialien der für das MSG- und UP-Schweißen verwendeten Drahtelektroden zueinander kompatibel sind und abhängig von der Prüfung die Ausgabe einer Nutzerausgabe über die Nutzerschnittstelle bewirken.

Die Schweißstromquelle umfasst insbesondere ein Gehäuse, in dem das Leistungsteil und die Steuereinrichtung untergebracht sind. Die MSG-Schnittstelle und die UP-Schnittstelle sind insbesondere an dem Gehäuse angeordnet.

Die zuvor genannte Aufgabe wird erfindungsgemäß weiterhin gelöst durch ein Schweißsystem mit der zuvor beschriebenen Schweißstromquelle oder einer Ausführungsform davon, mit einer MSG-Peripherie zum MSG-Schweißen und mit einer UP-Peripherie zum UP-Schweißen, wobei die MSG-Peripherie, insbesondere eine Drahtvorschubeinrichtung der MSG-Peripherie, an die MSG-Schnittstelle anschließbar oder angeschlossen ist und wobei die UP-Peripherie, insbesondere eine Drahtvorschubeinrichtung der UP-Peripherie, an die UP-Schnittstelle anschließbar oder angeschlossen ist.

Die MSG-Peripherie kann insbesondere eine Drahtvorschubeinrichtung umfassen. Weiter kann die MSG-Peripherie einen an die Drahtvorschubeinrichtung anschließbaren oder angeschlossenen Schweißbrenner umfassen. Bei dem Schweißbrenner kann es sich beispielsweise um einen Handbrenner oder um einen Schweißbrenner für das automatisierte MSG-Schweißen handeln, beispielsweise um einen Schweißbrenner an einem Schweißroboter. Weiter kann die MSG-Peripherie eine Schutzgasregelungseinrichtung zur Regelung des zum Schweißbrenner geleiteten Schutzgasstroms aufweisen. Die Schutzgasregelungseinrichtung kann auch in die Schweißstromquelle oder die Drahtvorschubeinrichtung integriert werden. Zudem kann die MSG-Peripherie beispielsweise auch eine Schweißrauchabsaugeinrichtung umfassen.

Die UP-Peripherie kann insbesondere eine Drahtvorschubeinrichtung umfassen. Weiter kann die UP-Peripherie einen UP-Schweißkopf mit einer Granulatzuführung aufweisen. Im Betrieb tritt aus dem UP-Schweißkopf die von der Drahtvorschubeinrichtung geförderte Drahtelektrode aus, der von einem von der Granulatzuführung zur Verfügung gestellten Granulatstrom umgeben ist. Weiter kann die UP-Peripherie eine Bewegungseinheit aufweisen, beispielsweise einen sogenannten UP-Traktor, der während des Schweißprozesses den UP-Schweißkopf und die zu schweißenden Naht relativ zueinander verfährt. Die UP-Peripherie kann auch eine Einsammeleinrichtung, insbesondere Aufsaugvorrichtung, zum Einsammeln, insbesondere Aufsaugen, des nicht genutzten Granulats aufweisen. Diese Einsammelvorrichtung kann beispielsweise an der Bewegungseinheit montiert sein.

Das System kann beispielsweise weiter die zuvor beschriebene Schweißbrenner-Ablagevorrichtung umfassen.

Die zuvor genannte Aufgabe wird erfindungsgemäß weiterhin gelöst durch ein Schweißverfahren unter Verwendung des zuvor beschriebenen Schweißsystems oder einer Ausführungsform davon, bei dem unter Verwendung der MSG-Peripherie, insbesondere unter Verwendung einer Drahtvorschubeinrichtung der MSG-Peripherie, ein Metallschutzgasschweißvorgang durchgeführt wird und bei dem unter Verwendung der UP-Peripherie, insbesondere unter Verwendung einer Drahtvorschubeinrichtung der UP-Peripherie, ein Unterpulverschweißvorgang durchgeführt wird. Durch die Verwendung des zuvor beschriebenen Schweißsystems können der Metallschutzgasschweißvorgang und der Unterpulverschweißvorgang in beliebiger Reihenfolge durchgeführt werden, ohne dass ein zwischenzeitliches Wechseln der Peripherie erforderlich ist.

Im Folgenden werden verschiedene Ausführungsformen der Schweißstromquelle, des Schweißsystems und des Schweißverfahrens beschrieben, wobei die einzelnen Ausführungsformen jeweils unabhängig voneinander für die Schweißstromquelle, das Schweißsystem und das Schweißverfahren gelten. Darüber hinaus können die einzelnen Ausführungsformen beliebig miteinander kombiniert werden.

Bei einer Ausführungsform ist die MSG-Schnittstelle zur Übermittlung von Steuersignalen an eine an die MSG-Schnittstelle angeschlossene MSG-Peripherie, insbesondere an eine Drahtvorschubeinrichtung der MSG-Peripherie, eingerichtet. Zusätzlich oder alternativ ist die UP-Schnittstelle zur Übermittlung von Steuersignalen an eine an die UP-Schnittstelle angeschlossene UP-Peripherie, insbesondere an eine Drahtvorschubeinrichtung der UP-Peripherie, eingerichtet.

Zu diesem Zweck können die MSG-Schnittstelle und/oder die UP-Schnittstelle einen jeweiligen Anschluss mit ein oder mehreren gesonderten Kontakten zur Ausgabe des Steuersignals aufweisen. Auf diese Weise kann eine Komponente der MSG- bzw. UP-Peripherie über eine entsprechende Datenleitung mit den Kontakten verbunden werden, um die Steuersignale zu empfangen. Alternativ ist es auch denkbar, dass die Steuersignale auf den bereitgestellten Ausgangsstrom aufmoduliert werden, so dass keine gesonderte Datenleitung erforderlich ist.

Bei einer Ausführungsform ist die Steuereinrichtung dazu eingerichtet, bei Ausgabe eines Ausgangsstroms zum MSG-Schweißen über die MSG-Schnittstelle die Ausgabe von Drahtvorschub-Steuersignalen zum Bewirken eines Drahtvorschubs einer Drahtvorschubeinrichtung einer an die MSG-Schnittstelle angeschlossenen MSG-Peripherie zu bewirken und/oder bei Ausgabe eines Ausgangsstroms zum UP-Schweißen über die UP-Schnittstelle die Ausgabe von Drahtvorschub-Steuersignalen zum Bewirken eines Drahtvorschubs einer Drahtvorschubeinrichtung einer an die UP-Schnittstelle angeschlossenen UP-Peripherie zu bewirken. Auf diese Weise wird beim MSG-Schweißprozess die Drahtelektrode von der Drahtvorschubeinrichtung der MSG-Peripherie aus dem Schweißbrenner gefördert, so dass ein MSG-Schweißprozess durchgeführt werden kann. Weiter wird auf diese Weise beim UP-Schweißprozess die Drahtelektrode von der Drahtvorschubeinrichtung der UP-Peripherie aus dem UP-Schweißkopf gefördert, so dass ein UP-Schweißprozess durchgeführt werden kann.

Die Steuereinrichtung bewirkt die Ausgabe von Drahtvorschub-Steuersignalen vorzugsweise derart, dass die Drahtvorschubeinrichtung der MSG-Peripherie die Drahtelektrode zurückzieht und/oder anhält, wenn die Schweißstromquelle auf die UP-Schweißfunktion geschaltet ist, und/oder dass die Drahtvorschubeinrichtung der UP-Peripherie die Drahtelektrode zurückzieht und/oder anhält, wenn die Schweißstromquelle auf die MSG-Schweißfunktion geschaltet ist. Insbesondere kann die Steuereinrichtung zu diesem Zweck entsprechende Steuersignale für die Drahtvorschubeinrichtung der MSG-Peripherie ausgeben, wenn die Schweißstromquelle auf die UP-Schweißfunktion geschaltet wird oder ist, und/oder entsprechende Steuersignale für die Drahtvorschubeinrichtung der UP-Peripherie ausgeben, wenn die Schweißstromquelle auf die MSG-Schweißfunktion geschaltet wird oder ist.

Bei einer Ausführungsform ist die Steuereinrichtung für die MSG-Schweißfunktion dazu eingerichtet, die Schweißstromquelle derart zu steuern, dass unter Verwendung des Leistungsteils ein Ausgangsstrom gemäß einer MSG-Kennlinie für das MSG-Schweißen über die MSG-Schnittstelle bereitgestellt wird, und/oder ist die Steuereinrichtung für die UP-Schweißfunktion dazu eingerichtet ist, die Schweißstromquelle derart zu steuern, dass unter Verwendung des Leistungsteils ein Ausgangsstrom gemäß einer UP-Kennlinie für das UP-Schweißen über die UP-Schnittstelle bereitgestellt wird.

Weiter kann die Steuereinrichtung für die MSG-Schweißfunktion dazu eingerichtet sein, die Ausgabe von Steuersignalen zur Steuerung der MSG-Peripherie, insbesondere der Drahtvorschubeinrichtung der MSG-Peripherie, und/oder zur Steuerung der UP-Peripherie, insbesondere der Drahtvorschubeinrichtung der UP-Peripherie, gemäß der MSG-Kennlinie bzw. gemäß der UP-Kennlinie zu bewirken.

Auf diese Weise kann die Ausgabe des Schweißstroms und vorzugsweise die Ausgabe von Steuersignalen angepasst an die jeweils ausgewählte Schweißfunktion über die entsprechende Schnittstelle erfolgen.

Die MSG-Kennlinie bzw. die UP-Kennlinie können jeweils ein oder mehrere Schweißparameter-Kennlinien für verschiedene Schweißparameter, wie zum Beispiel die Ausgangsspannung, die Stromstärke des Ausgangsstroms und/oder die Drahtvorschubgeschwindigkeit, umfassen.

Die MSG-Kennlinie ist vorzugsweise für einen Drahtelektrodendurchmesser von weniger als 2,4 mm, weiter bevorzugt weniger als 2,0 mm, konfiguriert. Vorzugsweise gibt die MSG-Kennlinie ein oder mehrere Sollwerte für die Stromstärke des Ausgangsstroms und/oder die Vorschubgeschwindigkeit des Drahtvorschubs vor. Die ein oder mehreren Sollwerte für den Drahtvorschub liegen vorzugsweise im Bereich 1 - 25 m/min.

Die MSG-Kennlinie gibt vorzugsweise eine Spannungs-geregelte und Strom-gesteuerte Regelung vor, bei der die Stromstärke des Ausgangsstroms variiert wird, um die Ausgangsspannung auf eine vorgegebene Ausgangsspannungs-Kennlinie der MSG-Kennlinie einzuregeln, vorzugsweise bei konstanter, insbesondere ebenfalls geregelter, Drahtvorschubgeschwindigkeit. Alternativ ist auch eine entsprechende Regelung bei variabler Drahtvorschubgeschwindigkeit denkbar, bei der die Drahtvorschubgeschwindigkeit zum Beispiel auf eine vorgegebene Drahtvorschubgeschwindigkeits-Kennlinie der MSG-Kennlinie eingeregelt wird.

Die UP-Kennlinie ist vorzugsweise für einen Drahtelektrodendurchmesser von mehr als 2,0 mm, weiter bevorzugt mehr als 2,4 mm, konfiguriert. Vorzugsweise gibt die UP-Kennlinie ein oder mehrere Sollwerte für die Stromstärke und/oder Spannungsstärke des Ausgangsstroms vor.

Die UP-Kennlinie gibt vorzugsweise eine Spannungs-geregelte und Drahtvorschub-gesteuerte Regelung vor, bei der die Drahtvorschubgeschwindigkeit variiert wird, um die Ausgangsspannung auf eine vorgegebene Ausgangsspannungs-Kennlinie der UP-Kennlinie einzuregeln. Zusätzlich kann auch die Stromstärke des Ausgangsstroms variiert werden. Alternativ kann die UP-Kennlinie auch eine Ausgangsstrom-geregelte Regelung vorgeben, bei der die Ausgangsspannung und/oder Drahtvorschubgeschwindigkeit variiert werden, um die Stromstärke des Ausgangsstroms auf eine vorgegebene Ausgangsstrom-Kennlinie der UP-Kennlinie einzuregeln. Die UP-Kennlinie kann insbesondere auch eine Ausgangsspannungs- und Ausgangsstrom-geregelte und Drahtvorschub-gesteuerte Regelung vorgeben.

Die Vorschubgeschwindigkeit liegt bei der Regelung vorzugsweise im Bereich 0,5 - 10 m/min.

Die MSG-Kennlinie und die UP-Kennlinie können weiter eine Schrittweite für die Änderung der Drahtvorschubgeschwindigkeit vorgeben. Vorzugsweise ist die Schrittweite bei der UP-Kennlinie feiner als die Schrittweite bei der MSG-Kennlinie. Die Schrittweite kann bei der UP-Kennlinie beispielsweise im Bereich 0.005 - 0.04 m/min. und bei der MSG-Kennlinie beispielweise im Bereich 0.05 - 0.4 m/min. liegen.

Bei einer Ausführungsform weist die Schweißstromquelle einen Signaleingang auf und die Schweißstromquelle ist über ein über den Signaleingang empfangenes Umschaltsignal zwischen der MSG-Schweißfunktion und der UP-Schweißfunktion umschaltbar. Zusätzlich oder alternativ kann die Schweißstromquelle eine Nutzerschnittstelle aufweisen und die Schweißstromquelle ist über eine Nutzereingabe an der Nutzerschnittstelle zwischen der MSG-Schweißfunktion und der UP-Schweißfunktion umschaltbar.

Die Schweißstromquelle ist vorzugsweise nicht über die Betätigung eines Brennertasters zum Starten eines Schweißvorgangs umschaltbar, sondern vorzugsweise über einen externen Trigger, beispielweise von einer übergeordneten Steuerung, oder über eine Nutzerschnittstelle der Schweißstromquelle. Die Umschaltung von einer Schweißfunktion zur anderen erfordert einen jeweiligen Wechselmechanismus in der Schweißstromquelle, beispielweise die Auswahl einer neuen Kennlinie für die entsprechende Schweißfunktion und/oder das Anhalten eines Drahtvorschubs der durch das Umschalten abgewählten Schweißfunktion. Daher erfolgt das Umschalten vorzugsweise gesondert vom Starten eines Schweißprozesses mit einem Brennertaster.

Es ist aber auch denkbar, die Steuereinrichtung so einzurichten, dass ein Umschalten zwischen der MSG-Schweißfunktion und der UP-Schweißfunktion durch Betätigen eines Brennertasters am Schweißbrenner der MSG-Peripherie und/oder eines Tasters oder Schalters an der UP-Peripherie bewirkt werden kann.

Weiterhin sind Kombinationen für die Umschaltung denkbar. So kann die Steuereinrichtung dazu eingerichtet sein, dass ein Umschalten von der UP-Schweißfunktion zur MSG-Schweißfunktion durch Betätigen eines Brennertasters am Schweißbrenner der MSG-Peripherie und ein Umschalten von der MSG-Schweißfunktion auf die UP-Schweißfunktion durch einen externen Trigger, beispielsweise von einer übergeordneten Steuerung, wie zum Beispiel eines Schweißroboters, oder über eine Nutzerschnittstelle der Schweißstromquelle bewirkt werden kann.

Bei einer Ausführungsform ist die Steuereinrichtung dazu eingerichtet, ein Umschalten der Schweißfunktion abhängig von einer Nutzerfreigabe für die betreffende Schweißfunktion zuzulassen oder zu blockieren. Das Umschalten der Schweißfunktion, insbesondere auf die MSG-Schweißfunktion oder die UP-Schweißfunktion, kann zum Beispiel von der Steuereinrichtung lediglich dann freigegeben werden, wenn der betreffende Nutzer eine Nutzerfreigabe für die betreffende Schweißfunktion hat. Die Nutzerfreigaben des die Schweißstromquelle bedienenden Nutzers können beispielsweise auf einem Speicher der Schweißstromquelle gespeichert sein. Die Nutzerfreigaben können auch auf einer anderen Komponente des Systems, insbesondere der MSG- und/oder UP-Peripherie, gespeichert sein, beispielsweise auf einem Speicher einer Drahtvorschubeinrichtung oder auf einem Speicher einer anderen über eine Schnittstelle mit der Schweißstromquelle verbundenen Vorrichtung, beispielsweise eines Servers. Weiterhin ist es denkbar, dass die Nutzerfreigabe anhand einer Zugehörigkeit der zum Beispiel auf einem Speicher der Schweißstromquelle gespeicherten Nutzerkennung zu einer für die Schweißfunktion zugelassenen Nutzergruppe gehört. Die Nutzerkennung und/oder die Nutzerfreigaben können beispielsweise gespeichert werden, wenn sich der Nutzer auf der Schweißstromquelle anmeldet, beispielsweise mittels eines RFID-Chips an einem RFID-Leser der Nutzerschnittstelle.

Bei einer Ausführungsform sind in einem Speicher der Steuereinrichtung ein oder mehrere MSG-Kennlinien für das MSG-Schweißen hinterlegt, die für die MSG-Schweißfunktion und vorzugsweise nicht für die UP-Schweißfunktion auswählbar sind. Zusätzlich oder alternativ können in einem Speicher der Steuereinrichtung ein oder mehrere UP-Kennlinien für das UP-Schweißen hinterlegt sein, die für die UP-Schweißfunktion und vorzugsweise nicht für die MSG-Schweißfunktion auswählbar sind. Auf diese Weise wird sichergestellt, dass in der MSG-Schweißfunktion lediglich MSG-Kennlinien und in der UP-Schweißfunktion lediglich UP-Kennlinien verwendet werden. Die MSG-Kennlinien bzw. UP-Kennlinien können zum Beispiel mittels eines Auswahl-Prozesses über die Nutzerschnittstelle auswählbar sein, beispielsweise nach Eingabe einer Nutzereingabe zum Starten des Auswahl-Prozesses.

Bei einer Ausführungsform ist die Steuereinrichtung dazu eingerichtet, die Schweißstromquelle derart zu steuern, dass ein Umschalten zwischen der MSG-Schweißfunktion und der UP-Schweißfunktion während eines laufenden Schweißprozesses, insbesondere während der Ausgabe eines Ausgangsstroms und/oder während der Förderung einer Drahtelektrode, blockiert ist. Auf diese Weise wird die Betriebssicherheit der Schweißstromquelle erhöht. Insbesondere kann auf diese Weise verhindert werden, dass die Drahtelektrode von der MSG-Peripherie gefördert wird, wenn sich die Schweißstromquelle auf die UP-Schweißfunktion geschaltet ist, bzw. dass die Drahtelektrode von der UP-Peripherie gefördert wird, wenn sich die Schweißstromquelle auf die MSG-Schweißfunktion geschaltet ist

Bei einer Ausführungsform ist die Steuereinrichtung dazu eingerichtet zu erkennen, ob an die MSG-Schnittstelle eine MSG-Peripherie, insbesondere eine Drahtvorschubeinrichtung der MGS-Peripherie, angeschlossen ist. Zusätzlich oder alternativ kann die Steuereinrichtung dazu eingerichtet sein zu erkennen, ob an die UP-Schnittstelle eine UP-Peripherie, insbesondere eine Drahtvorschubeinrichtung der UP-Peripherie, angeschlossen ist. Auf diese Weise kann die Steuereinrichtung feststellen, ob an die MSG-Schnittstelle bzw. die UP-Schnittstelle eine Peripherie angeschlossen ist, und, falls dies der Fall ist, ob die richtige Peripherie angeschlossen ist.

Insbesondere kann die MSG-Peripherie, insbesondere ein oder mehrere Komponenten der MSG-Peripherie, beispielsweise die Drahtvorschubeinrichtung der MSG-Peripherie, dazu eingerichtet sein, eine MSG-Kennung an die MSG-Schnittstelle zu übermitteln, zum Beispiel beim Anschließen an die Schweißstromquelle oder nach Erhalt eines Kennungsabfrage-Steuersignals von der Schweißstromquelle.

Zusätzlich oder alternativ kann die UP-Peripherie, insbesondere ein oder mehrere Komponenten der UP-Peripherie, beispielsweise die Drahtvorschubeinrichtung der UP-Peripherie, dazu eingerichtet sein, eine UP-Kennung an die UP-Schnittstelle zu übermitteln, zum Beispiel beim Anschließen an die Schweißstromquelle oder nach Erhalt eines Kennungsabfrage-Steuersignals von der Schweißstromquelle.

Die Steuereinrichtung ist vorzugsweise entsprechend dazu eingerichtet, eine über die MSG-Schnittstelle oder UP-Schnittstelle empfangene Kennung zu erhalten und als MSG- oder UP-Kennung zu identifizieren. Weiter ist die Steuereinrichtung vorzugsweise dazu eingerichtet, die MSG-Schweißfunktion freizugeben, wenn über die MSG-Schnittstelle eine MSG-Kennung empfangen wurde, und/oder die UP-Schweißfunktion freizugeben, wenn über die UP-Schnittstelle eine UP-Kennung empfangen wurde. Weiter kann die Steuereinrichtung dazu eingerichtet sein, die MSG-Schweißfunktion zu blockieren, solange über die MSG-Schnittstelle keine MSG-Kennung empfangen wird oder wenn eine falsche Kennung, beispielsweise UP-Kennung, empfangen wird, und/oder die UP-Schweißfunktion zu blockieren, solange über die UP-Schnittstelle keine UP-Kennung empfangen wird oder wenn eine falsche Kennung, beispielsweise MSG-Kennung, empfangen wird.

Die Steuereinrichtung kann weiterhin dazu eingerichtet sein, die Auswählbarkeit einer MSG-Kennlinie davon abhängig zu machen, dass die Steuereinrichtung den Anschluss von MSG-Peripherie, insbesondere einer Drahtvorschubeinrichtung der MSG-Peripherie, an die MSG-Schnittstelle erkannt hat, insbesondere eine MSG-Kennung über die MSG-Schnittstelle empfangen und als solche identifiziert hat.

Die Steuereinrichtung kann weiterhin dazu eingerichtet sein, die Auswählbarkeit einer UP-Kennlinie davon abhängig zu machen, dass die Steuereinrichtung den Anschluss von UP-Peripherie, insbesondere einer Drahtvorschubeinrichtung der UP-Peripherie, an die UP-Schnittstelle erkannt hat, insbesondere eine UP-Kennung über die UP-Schnittstelle empfangen und als solche identifiziert hat.

Mit den zuvor beschriebenen Ausgestaltungen kann die Bedienung der Schweißstromquelle bzw. des Systems erleichtert und die Bedienungssicherheit erhöht werden.

Bei einer Ausführungsform umfassen die MSG-Schnittstelle und die UP-Schnittstelle zueinander verschiedenartig ausgebildete Anschlüsse, insbesondere zum Anschließen einer jeweiligen Drahtvorschubeinrichtung. Auf diese Weise kann ein Verwechseln der Anschlüsse beim Verbinden der jeweiligen MSG- bzw. UP-Peripherie ausgeschlossen werden. Beispielsweise kann die MSG-Schnittstelle einen Anschluss zum Anschließen einer Drahtvorschubeinrichtung der MSG-Peripherie aufweisen, der sich vom Anschluss der UP-Schnittstelle zum Anschließen einer Drahtvorschubeinrichtung der UP-Peripherie in seiner Ausgestaltung unterscheidet, beispielsweise durch zueinander inkompatible Formen der jeweiligen Steckverbinderteile der Anschlüsse.

Bei einer Ausführungsform ist die Steuereinrichtung für die UP-Schweißfunktion dazu eingerichtet, die Schweißstromquelle derart zu steuern, dass unter Verwendung des Leistungsteils ein Ausgangsstrom gemäß einem UP-Schweißprogramm über die UP-Schnittstelle bereitgestellt wird, wobei das UP-Schweißprogramm mindestens zwei Phasen mit verschiedenen Schweißparametern umfasst. UP-Schweißstromquellen sind typischerweise nicht für die Steuerung komplexer UP-Schweißprogramme eingerichtet. Demgegenüber sind komplexe Schweißprogramme bei MSG-Schweißgeräten häufig zu finden. Durch die Kombination beider Schweißfunktionen in einer Schweißstromquelle mit entsprechend ausgestatteter Steuereinrichtung können auf einfache Weise auch die UP-Schweißvorgänge gemäß einem komplexeren UP-Schweißprogramm durchgeführt werden, das mehrere Phasen mit verschiedenen Schweißparametern aufweist. Beispielsweise kann das UP-Schweißprogramm eine Hauptphase und zusätzlich eine vorangestellte Startphase und/oder eine anschließende Endphase aufweisen, wobei die Schweißparameter der Start- und/oder Endphase vorzugsweise für eine höhere oder niedrigere Leistung eingestellt sind als die Schweißparameter der Hauptphase. Auf diese Weise kann der UP-Schweißprozess verbessert werden; insbesondere kann auf diese Weise die Nahtanfangs- und/oder - endqualität der beim UP-Schweißprozess erzeugten Naht verbessert werden.

Bei einer Ausführungsform ist die Steuereinrichtung für die Metallschutzgasschweißfunktion und/oder für die UP-Schweißfunktion dazu eingerichtet, die Schweißstromquelle derart zu steuern, dass in einem Strompfad des Ausgangsstroms zum Metallschutzgasschweißen und/oder UP-Schweißen eine der Spannung des Leistungsteils entgegengerichtete Gleichspannung zugeschaltet wird, insbesondere wenn die Schweißstromquelle im Kurzlichtbogenbetrieb arbeitet.

Die Ausgangsspannung ergibt sich somit durch eine Kombination der Spannung des Leistungsteils und der entgegengerichteten Gleichspannung. Das Zuschalten der Gleichspannung erfolgt insbesondere im Kurzschluss, d.h. wenn der Schweißdraht das Schweißbad bzw. ein zu schweißendes Werkstück kontaktiert. Das Zuschalten der Gleichspannung wird vorzugsweise bei oder nach, insbesondere unmittelbar nach, der Auflösung des Kurzschlusses beendet.

Durch die der Spannung des Leistungsteils entgegengerichtete Gleichspannung wird die Steilheit des Stromabfalls unterstützt, insbesondere bei Kurzschlussauflösung. Insbesondere wird die negative Steilheit des Stromabfalls erhöht. Auf diese Weise kann die Lichtbogenleistung beim Zünden des Lichtbogens im Moment der Kurzschlussauflösung reduziert werden, wodurch es z.B. zu weniger Spritzern bei der Kurzschlussauflösung kommt.

Die Gleichspannung wird in einem Strompfad des Ausgangsstroms zugeschaltet. Insbesondere kann die Gleichspannung zwischen dem Leistungsteil und einem Anschluss der MSG-Schnittstelle und/oder UP-Schnittstelle für den Ausgangsstrom zugeschaltet werden.

Bei einer Ausführungsform weist die Schweißstromquelle eine Steuer-Schnittstelle zum Anschluss einer übergeordneten Steuerung auf, wobei die Steuereinrichtung dazu eingerichtet ist, über die Steuer-Schnittstelle Steuersignale für eine Komponente der MSG-Peripherie und/oder für eine Komponente der UP-Peripherie und/oder für eine von der MSG-Peripherie und UP-Peripherie unabhängige Komponente auszugeben. Auf diese Weise kann die Schweißstromquelle mit einer übergeordneten Steuerung, beispielsweise mit einer speicherprogrammierbaren Steuerung (SPS) und/oder Robotersteuerung, verbunden werden, über die sowohl Komponenten der MSG-Peripherie als auch der UP-Peripherie sowie davon unabhängige Komponenten, beispielsweise übergreifende Verfahreinrichtungen, gesteuert werden können. Auf diese Weise lassen sich die Schweißstromquelle besser in eine Anlagensteuerung integrieren und die damit durchgeführten Schweißprozesse besser automatisieren.

Es ist beispielsweise denkbar, dass über die Steuer-Schnittstelle Funktionen einer übergeordneten Steuerung (z.B. eines Roboters), die sowohl das UP-Schweißen als auch das MSG-Schweißen ermöglicht, gesteuert werden. Es ist auch denkbar, dass lediglich das UP-Schweißen durch diese Steuerung gesteuert wird, während das MSG-Schweißen manuell, insbesondere über den Schweißbrenner, durchgeführt wird.

Bei einer Ausführungsform ist die Steuereinrichtung dazu eingerichtet, ein oder mehrere Kennwerte, insbesondere für eine Streckenenergie und/oder einen Wärmeeintrag, zu berechnen, insbesondere basierend auf während eines Schweißvorgangs, insbesondere vorhergehenden Schweißvorgangs, gemessener Messwerte für ein oder mehrere Schweißparameter und/oder vorgegebenen Schweißparametern des betreffenden Schweißvorgangs. Die Berechnung kann darüber hinaus optional auf über eine Nutzerschnittstelle erhaltenen ein oder mehreren Werten, insbesondere für eine Schweißgeschwindigkeit und/oder Schweißnahtlänge, basieren. Beispielsweise kann ein Wert für die Schweißgeschwindigkeit basierend auf einem über eine Nutzerschnittstelle erhaltenen Wert für die Schweißnahtlänge berechnet werden, insbesondere weiter basierend auf einem erfassten Wert der Dauer des betreffenden, insbesondere vorhergehenden, Schweißvorgangs.

Die Berechnung der ein oder mehreren Kennwerte hängt vorzugsweise davon ab, ob die Schweißstromquelle bei dem betreffenden Schweißvorgang auf die Metallschutzgasschweißfunktion oder auf die Unterpulverschweißfunktion geschaltet war. Insbesondere können bei der Berechnung Metallschutzgasschweiß-Parameter verwendet werden, beispielsweise ein für das Metallschutzgasschweißen hinterlegter MSG-Wirkungsgrad, wenn die Schweißstromquelle bei dem betreffenden Schweißvorgang auf die Metallschutzgasschweißfunktion geschaltet war, und/oder UP-Parameter verwendet werden, beispielsweise ein für das Unterpulverschweißen hinterlegter UP-Wirkungsgrad, wenn die Schweißstromquelle bei dem betreffenden Schweißvorgang auf die Unterpulverschweißfunktion geschaltet war.

Beispielsweise kann ein Kennwert für die Streckenenergie oder zur Berechnung der Streckenenergie abhängig davon berechnet werden, ob die Schweißstromquelle bei dem betreffenden Schweißvorgang auf die Metallschutzgasschweißfunktion oder die UP-Schweißfunktion geschaltet war. Auf diese Weise kann bei der Berechnung insbesondere der jeweilige Wirkungsgrad berücksichtigt werden, der sich beim MSG-Schweißen und beim Unterpulverschweißen unterscheidet.

Die berechneten ein oder mehreren Kennwerte können zum Beispiel über eine Nutzerschnittstelle der Schweißstromquelle ausgegeben werden. Zusätzlich oder alternativ können die berechneten ein oder mehreren Kennwerte auch über eine Schnittstelle, insbesondere digitale Schnittstelle, der Schweißstromquelle, ausgegeben werden, beispielsweise an einen Server.

Vorzugsweise ist die Steuereinrichtung dazu eingerichtet, die Schweißstromquelle derart zu steuern, dass Messwerte für ein oder mehrere Schweißparameter während eines laufenden Schweißvorgangs, insbesondere MSG-Schweißvorgangs und/oder UP-Schweißvorgangs, kontinuierlich erfasst und gespeichert werden, vorzugsweise in hoher Taktrate.

Bei einer Ausführungsform ist die Steuereinrichtung für die MSG-Schweißfunktion dazu eingerichtet, Schweißvorgangs-Informationen über Schweißparameter der MSG-Schweißvorgänge, insbesondere den zeitlichen Verlauf von Schweißparametern während der MSG-Schweißprozesse, zu erfassen und für eine Dokumentation der MSG-Schweißvorgänge zu speichern oder an ein Dokumentationssystem zu übermitteln. Zusätzlich oder alternativ ist die Steuereinrichtung für die UP-Schweißfunktion dazu eingerichtet, Schweißvorgangs-Schweißparameter der UP-Schweißvorgänge, insbesondere den zeitlichen Verlauf von Schweißparametern während der UP-Schweißprozesse, zu erfassen und für eine Dokumentation der UP-Schweißvorgänge zu speichern oder an ein Dokumentationssystem zu übermitteln. Vorzugsweise wir mit den Schweißvorgangs-Informationen eine Funktions-Information über die Schweißfunktion, auf die die Schweißstromquelle geschaltet ist, und/oder eine Kennlinien-Information über die aktuell ausgewählte Kennlinie gespeichert oder an das Dokumentationssystem übermittelt.

Die Steuereinrichtung kann insbesondere dazu eingerichtet sein, eine Umschalt-Information über ein Umschalten zwischen der MSG-Schweißfunktion und der UP-Schweißfunktion zu speichern oder an ein Dokumentationssystem zu übermitteln, vorzugsweise zusammen mit einer Zeitpunkts-Information über den Umschaltzeitpunkt.

Bei einer weiteren Ausführungsform stellt die Schweißstromquelle ein oder mehrere der folgenden weiteren Funktionen zur Verfügung und ist zwischen der MSG-Schweißfunktion, der UP-Schweißfunktion und den ein oder mehreren dieser Funktionen umschaltbar: E-Handschweißfunktion, Fugenhobelfunktion, WIG-Schweißfunktion. Insbesondere kann die Schweißstromquelle für diese ein oder mehreren weiteren Funktionen jeweilige Schnittstellen zum Anschließen jeweiliger Funktions-Peripherie aufweisen. Alternativ kann die jeweilige Funktions-Peripherie auch an die UP-Schnittstelle oder MSG-Schnittstelle anschließbar sein. Die Steuereinrichtung ist vorzugsweise insbesondere dazu eingerichtet, für eine jeweilige der ein oder mehreren weiteren Funktionen die Schweißstromquelle derart zu steuern, dass unter Verwendung des Leistungsteils ein entsprechender Ausgangsstrom für die betreffende weitere Funktion über die betreffende Schnittstelle bereitgestellt wird, insbesondere gemäß einer entsprechenden Funktions-Kennlinie.

Weitere Merkmale und Vorteile der Schweißstromquelle und der Schweißsystem und der Schweißverfahren ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel der Schweißstromquelle und des Schweißsystems,
- Fig. 2: ein zweites Ausführungsbeispiel der Schweißstromquelle und des Schweißsystems,
- Fig. 3: ein drittes Ausführungsbeispiel der Schweißstromquelle und des Schweißsystems,
- Fig. 4: ein weiteres Ausführungsbeispiel der Schweißstromquelle mit funktionaler Darstellung der Steuereinrichtung,
- Fig. 5: ein Flussdiagramm eines Umschalt-Prozesses zum Umschalten einer Schweißstromquelle zwischen der MSG-Schweißfunktion und der UP-Schweißfunktion,
- Fig. 6: ein Flussdiagramm eines Auswahl-Prozesses zum Auswählen einer Kennlinie und
- Fig. 7: ein Flussdiagramm für den Start eines Schweißprozesses.

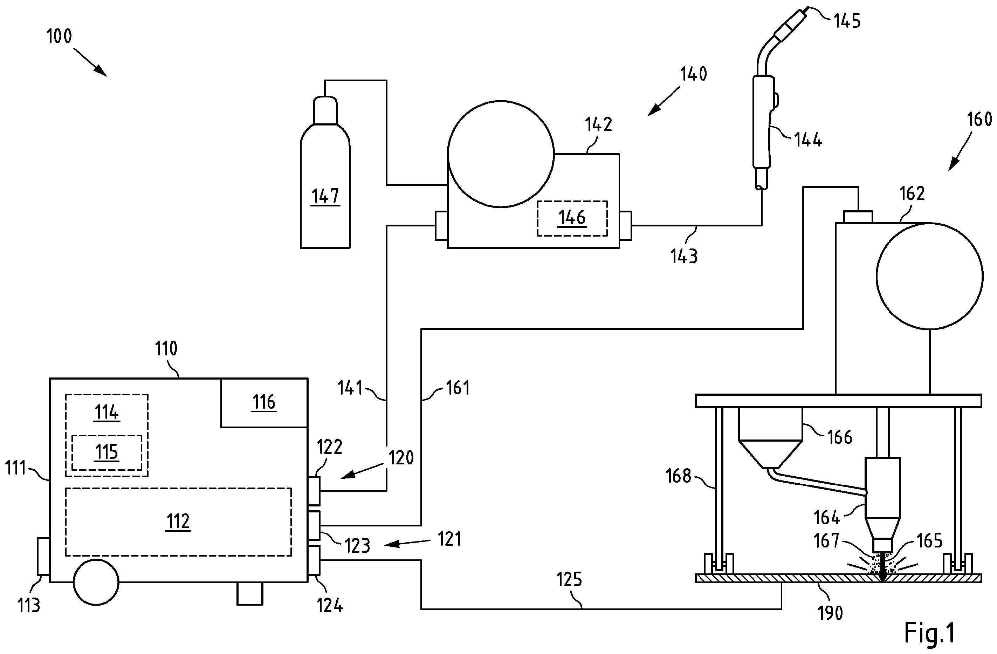

Figur 1 zeigt ein erstes Ausführungsbeispiel der Schweißstromquelle und des Schweißsystems.

Das Schweißsystem 100 umfasst eine Schweißstromquelle 110, eine MSG-Peripherie 140 zum MSG-Schweißen mit der Schweißstromquelle 110 und eine UP-Peripherie 160 zum UP-Schweißen mit der Schweißstromquelle 110.

Die Schweißstromquelle 110 ist zum Lichtbogenschweißen mit abschmelzender Elektrode vorgesehen und weist ein Leistungsteil 112, eine Steuereinrichtung 114 und eine Nutzerschnittstelle 116 auf, die in einem gemeinsamen Gehäuse 111 der Schweißstromquelle 110 untergebracht sind.

Die MSG-Peripherie 140 umfasst eine Drahtvorschubeinrichtung 142 zum Bevorraten und Fördern einer Drahtelektrode 145 für das MSG-Schweißen sowie einen Schweißbrenner 144, aus dem im Betrieb die Drahtelektrode 145 austritt. Zum MSG-Schweißen wird insbesondere eine Drahtelektrode 145 mit einem Durchmesser von weniger als 2,4 mm, insbesondere weniger als 2 mm, verwendet. Weiter umfasst die MSG-Peripherie 140 eine im vorliegenden Ausführungsbeispiel in die Drahtvorschubeinrichtung 142 integrierte Schutzgasregelungseinrichtung 146, die den von einer Schutzgasquelle 147 zum Schweißbrenner 144 geleiteten Schutzgasstrom steuert.

Die UP-Peripherie 160 umfasst eine Drahtvorschubeinrichtung 162 zum Bevorraten und Fördern einer Drahtelektrode 165 für das UP-Schweißen, einen mit einer Granulatzuführung 166 verbundenen UP-Schweißkopf 164, aus dem im Betrieb die Drahtelektrode 165 sowie ein von der Granulatzuführung 166 zugeführter Granulatstrom 167 austritt, der die Drahtelektrode 165 umgibt. Weiter umfasst die UP-Peripherie 160 eine Bewegungseinheit 168, die vorliegend als sogenannter UP-Traktor ausgebildet ist und an der der UP-Schweißkopf 164 befestigt ist. Im Betrieb kann der Schweißkopf 164 sowie die im vorliegenden Beispiel ebenfalls an der Bewegungseinheit befestigte Drahtvorschubeinrichtung 162 bzw. Granulatzuführung 166 entlang des Verlaufs der herzustellenden Schweißnaht (in Fig. 1 senkrecht zur Zeichnungsebene) verfahren werden.

Die Schweißstromquelle 110 weist eine MSG-Schnittstelle 120 zum Anschließen der MSG-Peripherie 140 auf. Die MSG-Schnittstelle 120 umfasst einen als Steckverbindungsteil ausgebildeten Anschluss 122, an den über eine Verbindungsleitung 141 mit entsprechend komplementärem Steckverbindungsteil die Drahtvorschubeinrichtung 142 der MSG-Peripherie angeschlossen werden kann. Der Schweißbrenner 144 kann weiterhin mittels eines Schlauchpakets 143 an die Drahtvorschubeinrichtung 142 angeschlossen werden.

Weiter weist die Schweißstromquelle 110 eine UP-Schnittstelle 121 zum Anschließen der UP-Peripherie 160 auf. Die UP-Schnittstelle 121 umfasst einen als Steckverbindungsteil ausgebildeten Anschluss 123, an den über eine Verbindungsleitung 161 mit entsprechend komplementärem Steckverbindungsteil die Drahtvorschubeinrichtung 162 der UP-Peripherie 160 angeschlossen werden kann.

Der Anschluss 122 der MSG-Schnittstelle 120 und der Anschluss 123 der UP-Schnittstelle sind vorzugsweise zueinander verschiedenartig ausgebildet, so dass der Nutzer der Schweißstromquelle 110 die beiden Anschlüsse 122, 123 nicht miteinander verwechseln kann. Insbesondere können die Anschluss 122, 123 geometrisch zueinander verschiedene Steckverbindungsteile, beispielsweise verschiedenartige Buchsen, aufweisen, so dass nur die Leitung 141 bzw. 161 mit dem entsprechend komplementären Steckverbindungsteil in den jeweiligen Anschluss 122, 123 passt.

Zusätzlich oder alternativ kann die Drahtvorschubeinrichtung 142 zur Übermittelung einer MSG-Kennung und die Drahtvorschubeinrichtung 162 zur Übermittelung einer UP-Kennung eingerichtet sein, wenn diese an die Schweißstromquelle 110 angeschlossen werden. Die Steuereinrichtung 114 kann dann durch Detektion der jeweiligen Kennung über die jeweilige Schnittstelle 120 bzw. 121 erkennen, ob die richtige Peripherie an die richtige Schnittstelle angeschlossen ist.

Weiter umfasst die Schweißstromquelle 110 noch einen Werkstückanschluss 124, das für einen Schweißvorgang mittels einer Werkstückleitung 125 mit dem zu schweißenden Werkstück 190 verbunden wird. Die Werkstückleitung 125 kann beispielsweise auf Erdpotential liegen. In diesem Fall kann der Werkstückanschluss 124 auch als Erdungsanschluss bezeichnet werden. Anstelle eines gemeinsamen Werkstückanschlusses 124 können für die MSG-Schweißfunktion und die UP-Schweißfunktion auch separate Werkstückanschlüsse vorgesehen sein.

Das Leistungsteil 112 umfasst Leistungselektronik, mit der ein über den Netzanschluss 113 der Schweißstromquelle 110 bereitgestellter Eingangsstrom in einen Ausgangsstrom zum Lichtbogenschweißen umgerichtet wird, den die Schweißstromquelle 110 über die MSG-Schnittstelle 120 bzw. die UP-Schnittstelle 121 zur Verfügung stellt.

Die Steuereinrichtung 114 ist dazu eingerichtet, die Schweißstromquelle 110 zu steuern, insbesondere zur Durchführung von Schweißvorgängen, und zu konfigurieren, beispielsweise anhand von über die Nutzerschnittstelle 116 getätigte Nutzereingaben. Weiterhin kann die Steuereinrichtung 114 dazu eingerichtet sein, Nutzerausgaben über die Nutzerschnittstelle 116 auszugeben. Die Steuereinrichtung 114 kann mehrere Teilsteuereinheiten umfassen. Beispielsweise kann das Leistungsteil 112 eine Teilsteuereinheit aufweisen, die die Regelung von Schweißparametern während eines Schweißprozesses bzw. die Steuerung der Leistungselektronik des Leistungsteils 112 bewirkt. Diese Teilsteuereinheit kann als Teil der Steuereinrichtung 114 angesehen werden, auch wenn die Steuereinrichtung 114 in Fig. 1 zeichnerisch separat vom Leistungsteil 112 dargestellt ist.

Die Schweißstromquelle 110 ist zwischen einer MSG-Schweißfunktion und eine UP-Schweißfunktion umschaltbar. Zu diesem Zweck kann in einem Speicher 115 der Steuereinrichtung 114 beispielsweise eine Statusvariable S gespeichert sein, deren Wert anzeigt, ob die Schweißstromquelle 110 auf die MSG-Schweißfunktion oder auf die UP-Schweißfunktion geschaltet ist. Beispielsweise kann ein Wert der Statusvariablen S = 1 anzeigen, dass die Schweißstromquelle 110 auf die MSG-Schweißfunktion geschaltet ist, und ein Wert der Statusvariablen S = 2 anzeigen, dass die Schweißstromquelle 110 auf die UP-Schweißfunktion geschaltet ist.

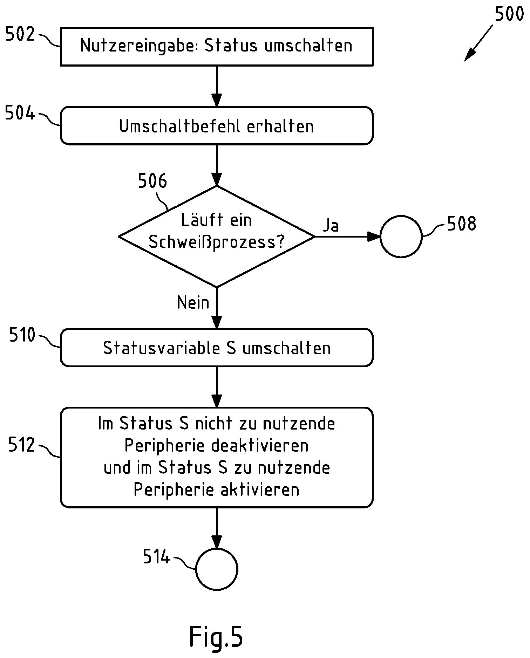

Das Umschalten der Schweißstromquelle 110 kann beispielsweise über die Nutzerschnittstelle 116 bewirkt werden. Ein exemplarischer Umschalt-Prozess hierfür wird weiter unten im Kontext von Fig. 5 erläutert.

Die Steuereinrichtung 114 ist für die MSG-Schweißfunktion, d.h. beispielsweise wenn die Statusvariable auf S = 1 gesetzt ist, dazu eingerichtet, die Schweißstromquelle 110 derart zu steuern, dass unter Verwendung des Leistungsteils 112 ein Ausgangsstrom zum MSG-Schweißen über die MSG-Schnittstelle 120 bereitgestellt wird. Der Ausgangsstrom für das MSG-Schweißen wird bei der Schweißstromquelle 110 über den Anschluss 122 bereitgestellt. Für das MSG-Schweißen wird der Schweißstromkreis dann bei angeschlossener MSG-Peripherie 140 über die Verbindungsleitung 141, über eine im Schlauchpaket 143 vorgesehene Schweißstromleitung, über die im Schweißbrenner 144 mittels einer Drahtkontaktierung mit der Schweißstromleitung elektrisch leitend verbundenen Drahtelektrode 145, über den beim MSG-Schweißen zwischen Drahtelektrode 145 und dem zu schweißendem Werkstück 190 brennenden Schweißlichtbogen, über das Werkstück 190, über die Werkstückleitung 125 und über den Werkstückanschluss 124 geschlossen.

Die Steuereinrichtung 114 ist weiter für die UP-Schweißfunktion, d.h. beispielsweise wenn die Statusvariable auf S = 2 gesetzt ist, dazu eingerichtet, die Schweißstromquelle 110 derart zu steuern, dass unter Verwendung des Leistungsteils 112 ein Ausgangsstrom zum UP-Schweißen über die UP-Schnittstelle 121 bereitgestellt wird. Der Ausgangsstrom für das UP-Schweißen wird bei der Schweißstromquelle 110 über den Ausgang 123 bereitgestellt. Für das MSG-Schweißen wird der Schweißstromkreis dann bei angeschlossener UP-Peripherie 160 über die Verbindungsleitung 161, über eine zwischen Drahtvorschubeinrichtung 162 und UP-Schweißkopf 164 verlaufende Schweißstromleitung, über die im UP-Schweißkopf 164 mittels einer Drahtkontaktierung mit der Schweißstromleitung elektrisch leitend verbundenen Drahtelektrode 165, über den beim UP-Schweißen zwischen Drahtelektrode 165 und dem zu schweißendem Werkstück 190 brennenden Schweißlichtbogen, über das Werkstück 190, über die Werkstückleitung 125 und über den Werkstückanschluss 124 geschlossen.

Die Steuereinrichtung 114 ist weiter dazu eingerichtet, über den Anschluss 122 bzw. 123 Drahtvorschub-Steuersignale zur Steuerung der Drahtvorschubeinrichtung 142 bzw. 162 sowie beim MSG-Schweißen Schutzgas-Steuersignale zur Steuerung der Schutzgasregelungseinrichtung 146 auszugeben. Die Anschlüsse 122 und 123 können zu diesem Zweck beispielsweise jeweils ein oder mehrere Kontakte und die Verbindungsleitungen 141, 161 entsprechend ein oder mehrere gesonderte Signalleitungen aufweisen, über die die Drahtvorschub- und Schutzgas-Steuersignale zur jeweiligen Drahtvorschubeinrichtung 142 bzw. 162 übermittelt werden. Es ist aber auch denkbar, dass die Drahtvorschub-Steuersignale bzw. Schutzgas-Steuersignale auf die Ausgangsstromleitung für den Schweißstrom aufmoduliert werden.

Für die MSG-Schweißfunktion steuert die Steuereinrichtung 114 die Drahtvorschubeinrichtungen 142 bzw. 162 derart an, dass die Drahtelektrode 145 aus dem Schweißbrenner 144 bewegt wird, während die Drahtelektrode 165 in den UP-Schweißkopf 164 zurückgezogen wird und/oder stillsteht. Für die UP-Schweißfunktion steuert die Steuereinrichtung 114 die Drahtvorschubeinrichtungen 142 bzw. 162 derart an, dass die Drahtelektrode 165 aus dem UP-Schweißkopf 164 bewegt wird, während die Drahtelektrode 145 in den Schweißbrenner 144 zurückgezogen wird und/oder stillsteht.

Der Ausgangsstrom zum MSG-Schweißen wird vorzugsweise entsprechend einer MSG-Kennlinie für das MSG-Schweißen bereitgestellt. Die Ausgabe von Drahtvorschub-Steuersignalen erfolgt vorzugsweise ebenfalls gemäß der MSG-Kennlinie.

Eine solche MSG-Kennlinie ist vorzugsweise für einen Drahtelektrodendurchmesser kleiner 2,4 mm eingerichtet.

Weiter gibt die MSG-Kennlinie vorzugsweise ein oder mehrere Sollwerte für den Schweißstrom, ein oder mehrere Sollwerte für die Schweißspannung und/oder ein oder mehrere Sollwerte für die Drahtvorschubgeschwindigkeit vor. Beispielsweise kann die MSG-Kennlinie einen Auswahlbereich für Drahtvorschubgeschwindigkeiten vorgeben, aus der Nutzer eine Drahtvorschubgeschwindigkeit als Sollwert auswählen kann. Weiter kann die MSG-Kennlinie beispielsweise eine Spannungs-Kennlinie, die einem vom Nutzer auswählbaren Drahtvorschubgeschwindigkeits-Sollwert einen zugehörigen Spannungs-Sollwert zuordnet, und/oder eine Stromstärken-Kennlinie umfassen, die einem vom Nutzer auswählbaren Drahtvorschubgeschwindigkeits-Sollwert einen zugehörigen Stromstärken-Sollwert zuordnet.

Weiter bevorzugt gibt die MSG-Kennlinie eine spannungsgeführte Regelung vor, bei der die Ausgangsspannung zwischen dem Anschluss 122 und dem Werkstückanschluss 124 so eingestellt wird, dass sich ein vorgegebener Schweißstrom und/oder eine vorgegebene Drahtvorschubgeschwindigkeit einstellen. Alternativ kann die MSG-Kennlinie auch eine stromgeführte Regelung vorgeben, bei der die Ausgangsstromstärke über den Anschluss 122 so eingestellt wird, dass sich eine vorgegebener Schweißspannung und/oder eine vorgegebene Drahtvorschubgeschwindigkeit einstellen.

Der Ausgangsstrom zum UP-Schweißen wird vorzugsweise entsprechend einer UP-Kennlinie für das UP-Schweißen bereitgestellt. Die Ausgabe von Drahtvorschub-Steuersignalen erfolgt vorzugsweise ebenfalls gemäß der UP-Kennlinie.

Eine solche UP-Kennlinie ist vorzugsweise für einen Drahtelektrodendurchmesser größer 2,0 mm, weiter bevorzugt größer 2,4 mm, eingerichtet. Weiter gibt die UP-Kennlinie vorzugsweise ein oder mehrere Sollwerte für den Schweißstrom und/oder ein oder mehrere Sollwerte für die Schweißspannung vor. Weiter kann die UP-Kennlinie ein oder mehrere Sollwerte für die Drahtvorschubgeschwindigkeit vorgeben. Beispielsweise kann die MSG-Kennlinie einen Auswahlbereich für Drahtvorschubgeschwindigkeiten vorgeben, aus der Nutzer eine Drahtvorschubgeschwindigkeit als Sollwert auswählen kann. Weiter kann die MSG-Kennlinie beispielsweise eine Spannungs-Kennlinie, die einem vom Nutzer auswählbaren Drahtvorschubgeschwindigkeits-Sollwert einen zugehörigen Spannungs-Sollwert zuordnet, und/oder eine Stromstärken-Kennlinie umfassen, die einem vom Nutzer auswählbaren Drahtvorschubgeschwindigkeits-Sollwert einen zugehörigen Stromstärken-Sollwert zuordnet.

Weiter vorzugsweise gibt die UP-Kennlinie eine drahtvorschubgeführte Regelung vor, bei der die Drahtvorschubgeschwindigkeit so eingestellt wird, dass sich ein vorgegebener Schweißstrom und/oder eine vorgegebene Schweißspannung einstellen.

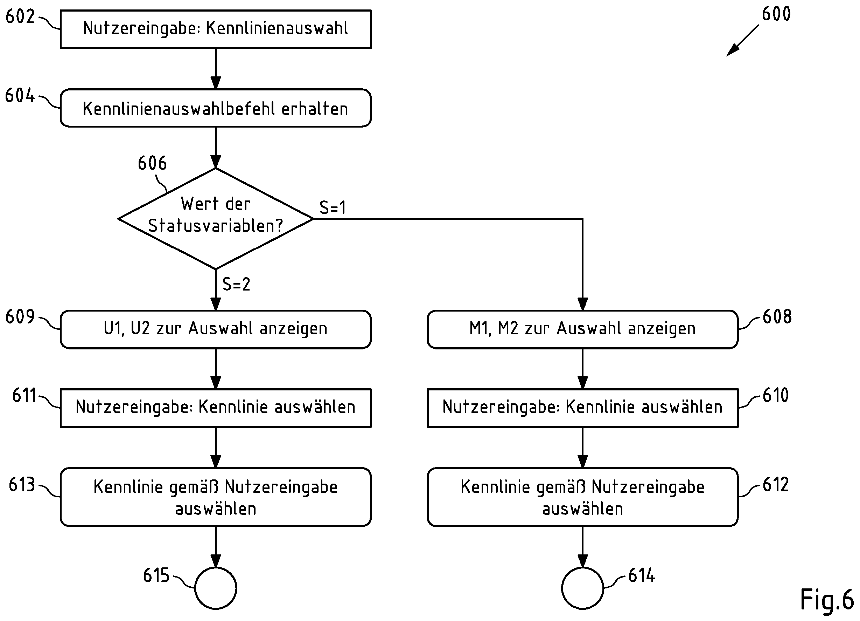

Insbesondere können in einem Speicher 115 der Steuereinrichtung 114 mehrere MSG-Kennlinien für das MSG-Schweißen und mehrere UP-Kennlinien für das UP-Schweißen gespeichert sein, aus denen ein Nutzer wählen kann. Ein möglicher Prozess zur Auswahl einer MSG- bzw. UP-Kennlinie wird weiter unten anhand der Figur 6 beschrieben.

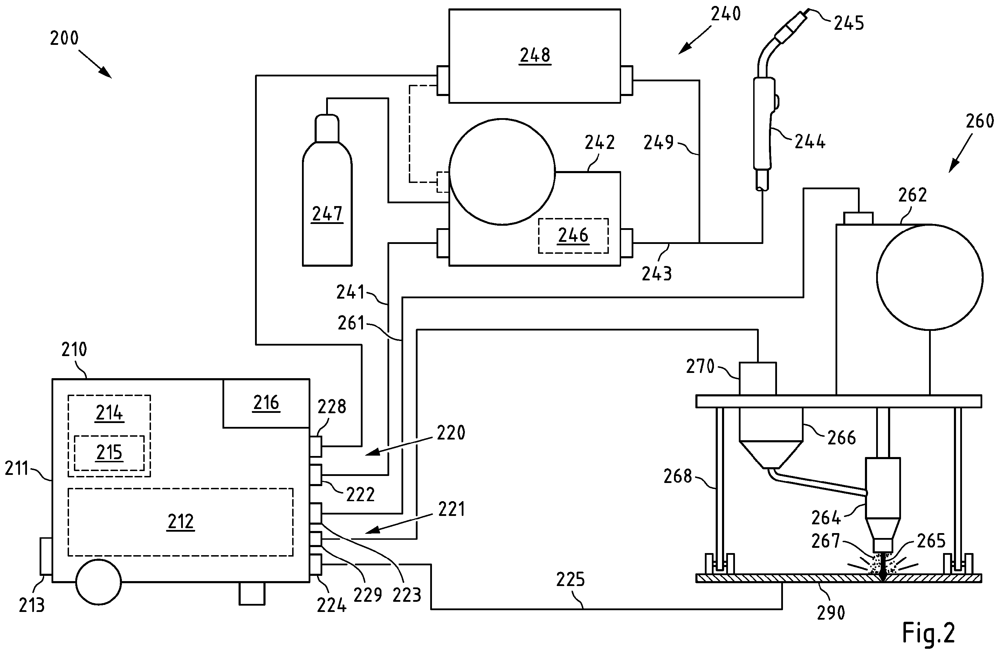

Figur 2 zeigt ein weiteres Ausführungsbeispiel der Schweißstromquelle und des Schweißsystems.

Das Schweißsystem 200 und die Schweißstromquelle 210 in Fig. 2 weisen einen ähnlichen Aufbau und eine ähnliche Funktionsweise auf wie das Schweißsystem 100 bzw. die Schweißstromquelle 110 aus Fig. 1. Einander entsprechende Komponenten sind in Fig. 2 mit gegenüber Fig. 1 um 100 erhöhten Bezugszeichen versehen. Zum Beispiel entspricht das Leistungsteil 212 in Fig. 2 dem Leistungsteil 112 aus Fig. 1. Hinsichtlich des Aufbaus und der Funktionsweise dieser Komponenten der Schweißstromquelle 210 und des Schweißsystems 200 wird auf die obige Beschreibung zu Fig. 1 verwiesen.

Das Schweißsystem 200 unterscheidet sich dadurch vom Schweißsystem 100, dass die MSG-Peripherie 240 eine separate Schweißrauchabsaugeinrichtung 248 aufweist, die im vorliegenden Ausführungsbeispiel über eine in das Schlauchpaket 243 mündende Absaugleitung 249 mit dem Schweißbrenner 244 verbunden ist, um beim MSG-Schweißen entstehenden Schweißrauch direkt mit dem Schweißbrenner 244 absaugen zu können. Alternativ könnte die Schweißrauchabsaugeinrichtung 248 auch in die Drahtvorschubeinrichtung 242 oder in die Schweißstromquelle 210 integriert sein.

Weiter unterscheidet sich das Schweißsystem 200 dadurch vom Schweißsystem 100, dass die UP-Peripherie 240 eine gesonderte UP-Steuereinrichtung 270 zur Steuerung der Bewegungseinheit 268 und/oder der Granulatzuführung 266 aufweist.

Weiter unterscheidet sich die Schweißstromquelle 210 dadurch von der Schweißstromquelle 110, dass die MSG-Schnittstelle 220 neben dem Anschluss 222 noch einen weiteren Anschluss 228 zur Ausgabe von Absaug-Steuersignalen aufweist. Die Steuereinrichtung 214 ist zudem für die MSG-Schweißfunktion dazu eingerichtet, über die Ausgabe von Absaug-Steuersignalen über den Anschluss 228 die im Betrieb daran angeschlossene Absaugeinrichtung 248 zu steuern. Alternativ ist es auch denkbar, dass die Absaugeinrichtung 248 an die Drahtvorschubeinrichtung 242 angeschlossen ist (s. gestrichelte Verbindung in Fig. 2) und Absaug-Steuersignale von der Steuereinrichtung 214 über die Drahtvorschubeinrichtung 242 zur Absaugeinrichtung 248 geleitet werden. Auf einen gesonderten Anschluss 228 an der Schweißstromquelle 210 kann in diesem Fall verzichtet werden.

Weiter unterscheidet sich die Schweißstromquelle 210 dadurch von der Schweißstromquelle 110, dass die UP-Schnittstelle 221 neben dem Anschluss 223 noch einen weiteren Anschluss 229 zur Ausgabe von UP-Steuersignalen aufweist. Die Steuereinrichtung 224 ist zudem für die UP-Schweißfunktion dazu eingerichtet über die Ausgabe von UP-Steuersignalen über den Anschluss 229 die im Betrieb daran angeschlossene UP-Steuereinrichtung 270 zu steuern, so dass diese entsprechend die Bewegungseinheit 268 und/oder die Granulatzuführung 266 steuert.

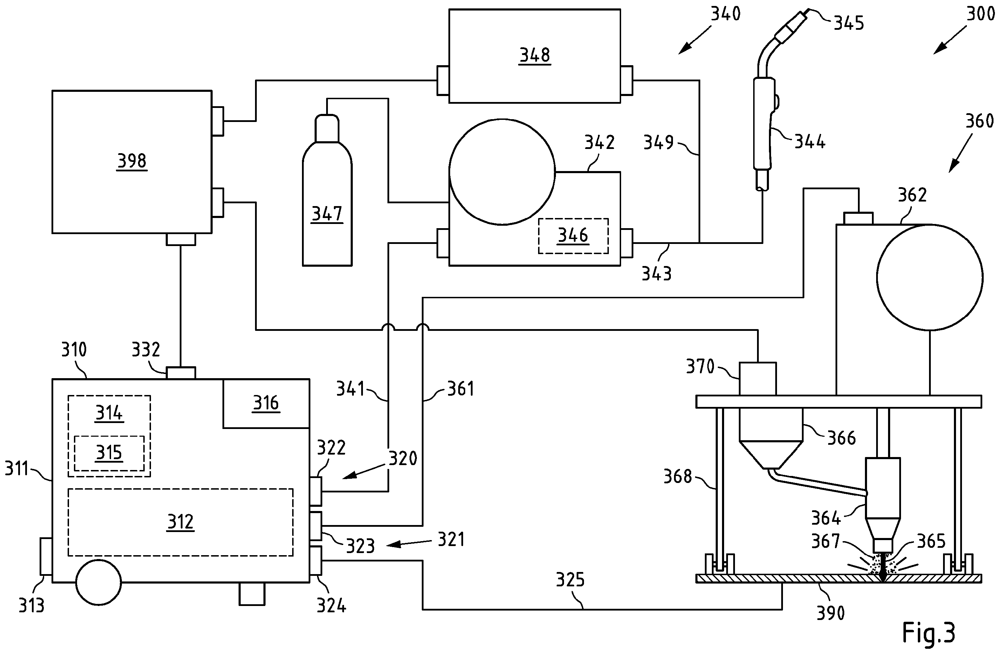

Figur 3 zeigt ein weiteres Ausführungsbeispiel der Schweißstromquelle und des Schweißsystems.

Das Schweißsystem 300 und die Schweißstromquelle 310 in Fig. 3 weisen einen ähnlichen Aufbau und eine ähnliche Funktionsweise auf wie das Schweißsystem 200 bzw. die Schweißstromquelle 210 aus Fig. 2. Einander entsprechende Komponenten sind in Fig. 3 mit gegenüber Fig. 2 um 100 erhöhten Bezugszeichen versehen. Zum Beispiel entspricht das Leistungsteil 312 in Fig. 3 dem Leistungsteil 212 aus Fig. 2. Hinsichtlich des Aufbaus und der Funktionsweise dieser Komponenten der Schweißstromquelle 310 und des Schweißsystems 300 wird auf die obige Beschreibung zu den Figuren 1 und 2 verwiesen.

Das Schweißsystem 300 unterscheidet sich dadurch vom Schweißsystem 200, dass eine übergeordnete Steuerung 398, beispielsweise eine speicherprogrammierbare Steuerung, vorgesehen ist, die mit der Absaugeinrichtung 348 und der UP-Steuereinrichtung 370 und ggf. weiteren vorgesehenen Komponenten zu deren Steuerung verbunden ist. Weiter weist die Schweißstromquelle 310 eine Steuer-Schnittstelle 332 zum Anschluss an die übergeordnete Steuerung 398 auf und die Steuereinrichtung 314 ist dazu eingerichtet, Steuersignale, insbesondere Absaug-Steuersignale zur Steuerung der Schweißrauchabsaugeinrichtung 348 über die übergeordnete Steuerung 398 sowie UP-Steuersignale zur Steuerung der UP-Steuereinrichtung 370 über die übergeordnete Steuerung 398 auszugeben. Auf diese Weise kann beispielsweise auf die Anschlüsse 228 und 229 verzichtet werden. Die Steuer-Schnittstelle 332 bildet, wenn die Schweißstromquelle 310 auf die MSG-Schweißfunktion geschaltet ist, Teil der MSG-Schnittstelle 320 und, wenn die Schweißstromquelle 310 auf die UP-Schweißfunktion geschaltet ist, Teil der UP-Schnittstelle 321.

Die Schweißstromquelle 310 kann von der übergeordneten Steuerung 398 beispielsweise auch ein externes Triggersignal zum Umschalten zwischen der MSG-Schweißfunktion und der UP-Schweißfunktion erhalten und die Steuereinrichtung 314 kann dazu eingerichtet sein, einen Umschaltprozess abhängig von dem externen Triggersignal durchzuführen.

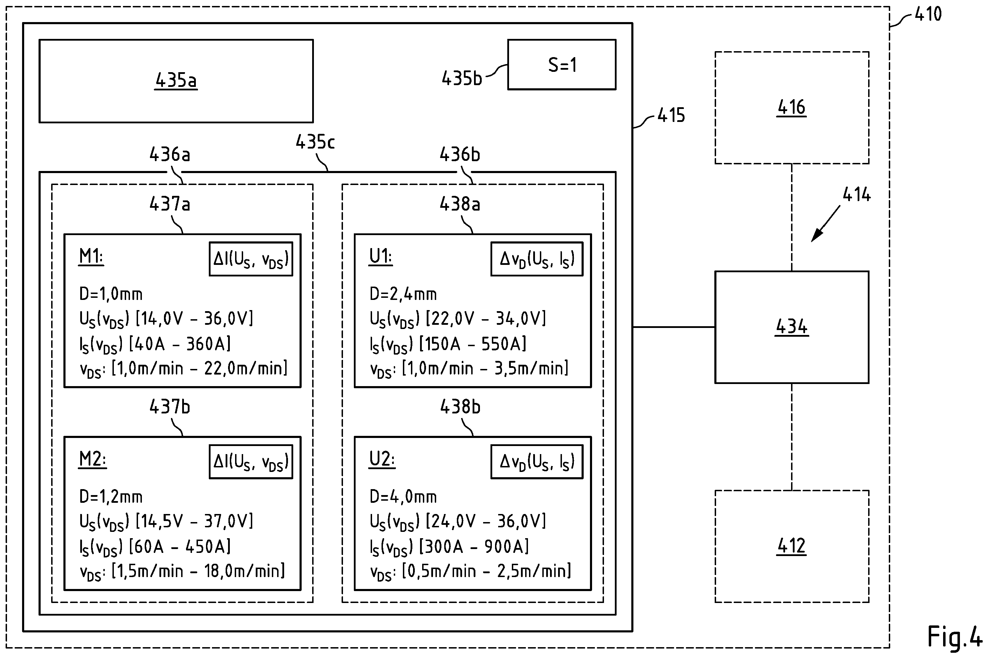

Figur 4 zeigt eine Steuereinrichtung 414 einer Schweißstromquelle 410 sowie das damit verbundene Leistungsteil 412 und die damit verbundene Nutzerschnittstelle 416 der Schweißstromquelle (in Fig. 4 jeweils gestrichelt gezeichnet) in schematischer Blockdarstellung. Insbesondere können die Steuereinrichtungen 114, 214 und/oder 314 der Steuereinrichtung 414 entsprechen. Demnach kann das Leistungsteil 412 insbesondere dem Leistungsteil 112, 212 bzw. 312 und die Nutzerschnittstelle 416 insbesondere der Nutzerschnittstelle 116, 216 bzw. 316 entsprechen und bei der Schweißstromquelle 410 kann es sich entsprechend um die Schweißstromquelle 110, 210 bzw. 310 handeln mit ihren zuvor anhand der Fig. 1 - 3 beschriebenen jeweiligen Anschlüssen und Funktionen.

Die Steuereinrichtung 414 umfasst mindestens einen Mikroprozessor 434 und mindestens einen Speicher 415. Der Speicher 415 enthält einen Speicherbereich 435a mit Befehlen, deren Ausführung auf dem Mikroprozessor 434 eine Steuerung der Schweißstromquelle bewirkt. Weiter enthält der Speicher 415 einen Speicherbereich 435b, in dem ein Wert einer Statusvariablen S gespeichert ist, deren Wert anzeigt, ob die Schweißstromquelle auf die MSG-Schweißfunktion oder auf die UP-Schweißfunktion geschaltet ist. Weiter enthält der Speicher 415 einen Speicherbereich 435c, in dem eine Gruppe 436a von MSG-Kennlinien 437a-b sowie eine Gruppe 436b von UP-Kennlinien 438a-b gespeichert ist.

Die MSG-Kennlinien 437a-b sind in Fig. 4 als "M1" bzw. "M2" bezeichnet und umfassen einen jeweiligen Soll-Bereich für die Drahtvorschubgeschwindigkeit v_{D} aus dem der Nutzer den Soll-Wert v_{DS} wählen kann (bei "M1" zum Beispiel den Bereich von 1,0 m/min. bis 22,0 m/min.) sowie eine Spannungskennlinie U_{S}(v_{DS}) und eine Stromkennlinie I_{S}(v_{DS}), aus denen sich der Spannungs-Sollwert Us bzw. der Stromstärken-Sollwert Is als Funktion des vom Nutzer ausgewählten Drahtvorschubgeschwindigkeits-Sollwerts v_{DS} ergibt. Die Spannungskennlinie U_{S}(v_{DS}), die Stromkennlinie I_{S}(v_{DS}) und der auswählbare Bereich für den Drahtvorschubgeschwindigkeits-Sollwert sind dabei an den MSG-Prozess sowie an einen vorgegebenen Drahtdurchmesser D mit D < 2,4 mm, vorzugsweise < 2,0 mm, angepasst. Hinter der Spannungskennlinie U_{S}(v_{DS}) und der Stromkennlinie I_{S}(v_{DS}) sind exemplarische Spannungs- und Strombereiche angegeben, innerhalb derer die jeweilige Kennlinie abhängig von v_{DS} variiert.

Weiter sind die MSG-Kennlinien 437a-b als Spannungs-geregelte, im vorliegenden Beispiel zudem Drahtvorschub-geregelte, sowie Strom-gesteuerte Kennlinien gekennzeichnet (in Fig. 4 durch "ΔI(U_{S}, v_{DS})" gekennzeichnet), d.h. die Stromstärke I des Ausgangsstroms wird um den Stromstärken-Sollwert Is variiert (I = Is + ΔI), um die Ausgangsspannung U und die Drahtvorschubgeschwindigkeit v_{D} zu regeln. Die Ausgangsspannung U wird auf den Spannungs-Sollwert Us unter Berücksichtigung der fallenden Maschinenkennlinie geregelt, d.h. die Ausgangsspannung U weicht bei der Regelung abhängig vom gemittelten Ausgangsstrom <I>t leicht von Us ab. Die Drahtvorschubgeschwindigkeit v_{D} wird auf den vom Nutzer gewählten Drahtvorschubgeschwindigkeits-Sollwert v_{DS} geregelt.

Die UP-Kennlinien 438a-b sind in Fig. 4 als "U1" bzw. "U2" bezeichnet und umfassen ebenfalls einen jeweilige Soll-Bereich für die Drahtvorschubgeschwindigkeit v_{D} aus dem der Nutzer den Soll-Wert v_{DS} wählen kann (bei "U1" zum Beispiel den Bereich von 1,0 m/min. bis 3,5 m/min.) sowie eine Spannungskennlinie U_{S}(v_{DS}) und eine Stromkennlinie I_{S}(v_{DS}), aus denen sich der Spannungs-Sollwert Us bzw. der Stromstärken-Sollwert Is als Funktion des vom Nutzer ausgewählten Drahtvorschubgeschwindigkeits-Sollwerts v_{DS} ergibt. Die Spannungskennlinie U_{S}(v_{DS}), die Stromkennlinie I_{S}(v_{DS}) und der auswählbare Bereich für den Drahtvorschubgeschwindigkeits-Sollwert sind dabei an den UP-Prozess sowie an einen vorgegebenen Drahtdurchmesser D mit D ≥ 2,0 mm, vorzugsweise ≥ 2,4 mm, angepasst. Hinter der Spannungskennlinie U_{S}(v_{DS}) und der Stromkennlinie I_{S}(v_{DS}) sind exemplarische Spannungs- und Strombereiche angegeben, innerhalb derer die jeweilige Kennlinie abhängig von v_{DS} variiert.

Weiter sind die UP-Kennlinien 438a-b als Spannungs-geregelte, im vorliegenden Beispiel zudem Stromstärken-geregelte, sowie Drahtvorschub-gesteuerte Kennlinien gekennzeichnet (in Fig. 4 durch "Δv_{D}(U_{S}, I_{S})" gekennzeichnet), d.h. die Drahtvorschubgeschwindigkeit v_{D} wird um den vom Nutzer ausgewählten Drahtvorschubgeschwindigkeits-Sollwert v_{DS} variiert (v_{D} = v_{DS} + Δv_{D}), um die Ausgangsspannung U und die Ausgangsstromstärke I zu regeln. Die Ausgangsspannung U wird auf den Spannungs-Sollwert Us unter Berücksichtigung der fallenden Maschinenkennlinie geregelt, d.h. die Ausgangsspannung U weicht bei der Regelung in der Praxis abhängig vom gemittelten Ausgangsstrom leicht von Us ab. Die Ausgangsstromstärke I_{D} wird auf den Schweißstrom-Sollwert Is geregelt.

Der Speicher 415 kann beispielsweise mehrere Hardware-Speicher umfassen, zum Beispiel einen Nur-Lese-Speicher (ROM-Speicher), einen permanenten Lese-Schreib-Speicher (wie zum Beispiel einen Flash- oder Festplatten-Speicher) und/oder einen flüchtigen Lese-Schreib-Speicher (wie zum Beispiel RAM-Speicher). Beispielsweise können der Speicherbereich 435a und 435c auf einem Nur-Lese-Speicher oder einem permanenten Lese-Schreib-Speicher und der Speicherbereich 435b auf einem flüchtigen oder permanenten Lese-Schreib-Speicher vorgesehen sein.

Figur 5 zeigt ein Flussdiagramm eines möglichen Prozesses zum Umschalten einer Schweißstromquelle, die eine Steuereinrichtung wie die Steuereinrichtung 414 umfasst, zwischen der MSG-Schweißfunktion und der UP-Schweißfunktion. Insbesondere kann die Steuereinrichtung 414 zur Steuerung der betreffenden Schweißstromquelle entsprechend dieses Prozesses eingerichtet sein.

Der Prozess 500 wird ausgelöst über eine entsprechende Nutzereingabe 502 des Nutzers an einer Nutzerschnittstelle 416. Beispielsweise kann es sich bei der Nutzereingabe um eine Betätigung eines gesonderten Betätigungselements, beispielsweise eine Hard- oder Soft-Taste, der Nutzerschnittstelle 416 zum Umschalten zwischen der MSG-Schweißfunktion und der UP-Schweißfunktion handeln.

Die Nutzereingabe 502 wird im ersten Schritt 504 von der Steuereinrichtung 414 erhalten. Die Steuereinrichtung 414 prüft sodann im Schritt 506, ob aktuell ein Schweißprozess läuft, insbesondere ob das Leistungsteil 412 einen Ausgangsstrom ausgibt und/oder angeschlossene Drahtvorschubeinrichtungen eine Drahtelektrode fördern. Stellt die Steuereinrichtung 414 fest, dass ein Schweißprozess läuft, wird der Prozess 500 beendet (Prozessende 508). Andernfalls bewirkt die Steuereinrichtung 414 im Schritt 510 ein Umschalten der Schweißstromquelle 410 entsprechend der Nutzereingabe 502.

Die Steuereinrichtung 414 kann das Umschalten der Schweißstromquelle 410 im Schritt 510 beispielsweise durch das Setzen einer Statusvariable S bewirken, deren Wert anzeigt, ob die Schweißstromquelle 410 auf die MSG-Schweißfunktion oder die UP-Schweißfunktion geschaltet ist. Beispielsweise kann ein Wert S = 1 die MSG-Schweißfunktion und ein Wert S = 2 die UP-Schweißfunktion anzeigen. Die Steuerung der Schweißstromquelle 410, insbesondere die Steuerung eines Schweißprozesses, bewirkt die Steuereinrichtung 414 vorzugsweise abhängig vom Wert der Statusvariablen S.

Durch die Prüfung in Schritt 506 wird ein Umschalten der Schweißstromquelle 410 während eines laufenden Schweißprozesses blockiert, wodurch die Betriebssicherheit erhöht wird.

Vor oder (wie in Fig. 5) nach der Umschaltung kann die Steuereinrichtung 414 zudem in Schritt 512 eine Deaktivierung der nach dem Umschalten der Statusvariablen S nicht zu nutzenden Peripherie bewirken. Beispielsweise gleichzeitig (wie im Schritt 512 in Fig. 5) oder zu einem anderen Zeitpunkt nach der Umschaltung kann die Steuereinrichtung 414 zudem eine Aktivierung der nach dem Umschaltung der Statusvariablen S zu nutzenden Peripherie bewirken.

Wird die Schweißstromquelle 410 auf die MSG-Schweißfunktion umgeschaltet, kann entsprechend die UP-Peripherie deaktiviert werden. Das Deaktivieren der UP-Peripherie umfasst vorzugsweise die Ausgabe von Steuersignalen über die UP-Schnittstelle, die ein Anhalten des Drahtvorschubs durch eine Drahtvorschubeinrichtung der UP-Peripherie und zuvor optional ein Zurückziehen der Drahtelektrode in den UP-Schweißkopf bewirken.

Wird die Schweißstromquelle 410 auf die UP-Schweißfunktion umgeschaltet, kann entsprechend die MSG-Peripherie deaktiviert werden. Das Deaktivieren der MSG-Peripherie umfasst vorzugsweise die Ausgabe von Steuersignalen über die MSG-Schnittstelle, die ein Anhalten des Drahtvorschubs durch eine Drahtvorschubeinrichtung der MSG-Peripherie und zuvor optional ein Zurückziehen der Drahtelektrode in den Schweißbrenner bewirken.

Anschließend endet der Umschalt-Prozess (Prozessende 514).

Figur 6 zeigt ein Flussdiagramm eines möglichen Prozesses zur Auswahl einer Kennlinie bei einer Schweißstromquelle 410, die die Steuereinrichtung 414 umfasst.

Bei der Schweißstromquelle 410 kann es sich beispielsweise um die Schweißstromquelle 110, 210 oder 410 handeln.

Der Prozess 600 wird ausgelöst über eine entsprechende Nutzereingabe 602 des Nutzers an einer Nutzerschnittstelle 416. Beispielsweise kann es sich bei der Nutzereingabe um eine Betätigung eines gesonderten Betätigungselements, beispielsweise eine Hard- oder Soft-Taste, der Nutzerschnittstelle 416 für die Kennlinien-Auswahl handeln.

Die Nutzereingabe 602 wird im ersten Schritt 604 von der Steuereinrichtung 414 erhalten. Die Steuereinrichtung 414 prüft sodann im Schritt 606, ob der aktuelle Wert der Statusvariablen S die MSG- oder die UP-Schweißfunktion anzeigt.

Zeigt der Wert der Statusvariablen S an, dass die Schweißstromquelle 410 auf die MSG-Schweißfunktion geschaltet ist (im vorliegenden Beispiel S = 1), so bewirkt die Steuereinrichtung 414 im nächsten Schritt 608 die Anzeige der im Speicher 415 hinterlegten MSG-Kennlinien (im vorliegenden Beispiel Kennlinien M1 und M2) zur Auswahl über die Nutzerschnittstelle 416 und wartet auf eine Nutzereingabe zur Auswahl der Kennlinie. Bei Erhalt der Nutzereingabe 610 zur Auswahl der Kennlinie, wählt die Steuereinrichtung 414 im Schritt 612 die entsprechend ausgewählte Kennlinie M1 oder M2 als aktuelle Kennlinie für den oder die nächsten Schweißprozesse aus und beendet den Prozess (Prozessende 614).

Zeigt der Wert der Statusvariablen S hingegen an, dass die Schweißstromquelle 410 auf die UP-Schweißfunktion geschaltet ist (im vorliegenden Beispiel S = 2), so bewirkt die Steuereinrichtung 414 im nächsten Schritt 609 die Anzeige der im Speicher 415 hinterlegten UP-Kennlinien (im vorliegenden Beispiel Kennlinien U1 und U2) zur Auswahl über die Nutzerschnittstelle 416 und wartet auf eine Nutzereingabe zur Auswahl der Kennlinie. Bei Erhalt der Nutzereingabe 611 zur Auswahl der Kennlinie, wählt die Steuereinrichtung 414 im Schritt 613 die entsprechend ausgewählte Kennlinie U1 oder U2 als aktuelle Kennlinie für den oder die nächsten Schweißprozesse aus und beendet den Prozess (Prozessende 615).

Auf diese Weise können, wenn das Schweißgerät auf die MSG-Schweißfunktion geschaltet ist, lediglich MSG-Kennlinien und, wenn das Schweißgerät auf die UP-Schweißfunktion geschaltet ist, lediglich UP-Kennlinien ausgewählt werden.

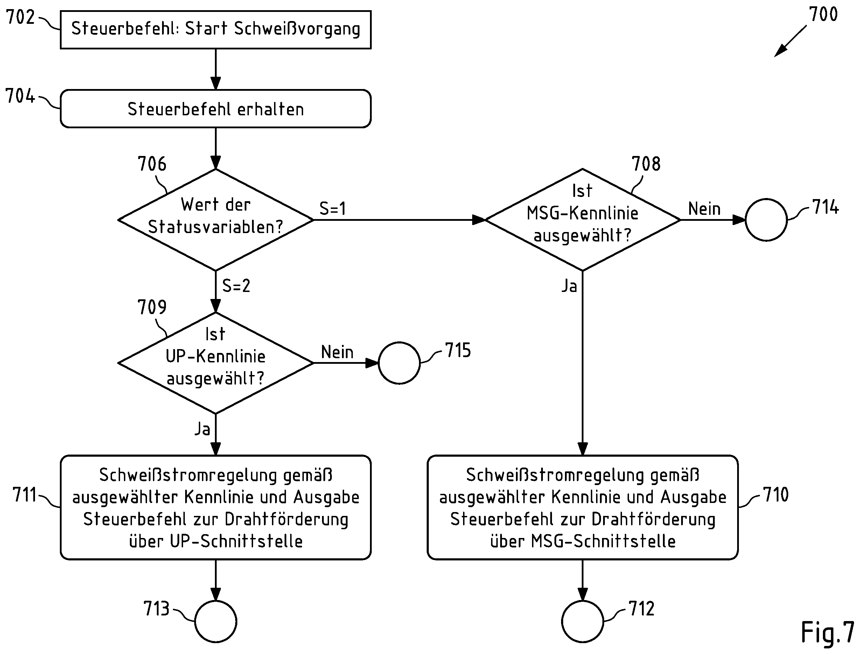

Figur 7 zeigt ein Flussdiagramm eines möglichen Prozesses zum Starten eines Schweißprozesses bei einer Schweißstromquelle 410, die die Steuereinrichtung 414 umfasst. Bei der Schweißstromquelle 410 kann es sich beispielsweise um die Schweißstromquelle 110, 210 oder 410 handeln.

Der Prozess 700 wird ausgelöst über den Erhalt eines Steuerbefehls 702 zum Starten des Schweißvorgangs. Der Steuerbefehl 702 kann beispielsweise durch ein externes Triggersignal, zum Beispiel von einer externen Steuerung, bewirkt werden, oder, wenn die Schweißstromquelle auf die MSG-Schweißfunktion geschaltet ist, durch ein Drücken an einem Triggerschalter des Schweißbrenners der MSG-Peripherie.

Der Steuerbefehl 702 wird im ersten Schritt 704 von der Steuereinrichtung 414 erhalten. Die Steuereinrichtung 414 prüft sodann im Schritt 706 den Wert der Statusvariablen S.

Zeigt der Wert der Statusvariablen S an, dass die Schweißstromquelle 410 auf die MSG-Schweißfunktion geschaltet ist (im vorliegenden Beispiel S = 1), so prüft die Steuereinrichtung 414 im nächsten Schritt 708, ob eine MSG-Kennlinie ausgewählt ist. Ist dies der Fall, bewirkt die Steuereinrichtung 414 im nächsten Schritt 710, die Regelung des Ausgangsstroms gemäß der ausgewählten Kennlinie und gibt über die MSG-Schnittstelle Drahtvorschub-Steuersignale zum Vorschub der Drahtelektrode aus, so dass die Drahtelektrode aus dem Schweißbrenner der MSG-Peripherie heraus gefördert wird. Nach Abschluss des Schweißvorgangs wird der Prozess beendet (Prozessende 712). Ist hingegen keine MSG-Kennlinie ausgewählt, wird der Prozess ohne Durchführung eines Schweißvorgangs beendet (Prozessende 714).

Zeigt der Wert der Statusvariablen S an, dass die Schweißstromquelle 410 auf die UP-Schweißfunktion geschaltet ist (im vorliegenden Beispiel S = 2), so prüft die Steuereinrichtung 414 im nächsten Schritt 709, ob eine UP-Kennlinie ausgewählt ist. Ist dies der Fall, bewirkt die Steuereinrichtung 414 im nächsten Schritt 711, die Regelung des Ausgangsstroms gemäß der ausgewählten Kennlinie und gibt über die UP-Schnittstelle Drahtvorschub-Steuersignale zum Vorschub der Drahtelektrode aus, so dass die Drahtelektrode aus dem UP-Schweißkopf der UP-Peripherie heraus gefördert wird. Zudem kann die Steuereinrichtung 414 noch die Ausgabe von UP-Steuersignalen zur Steuerung der Bewegungseinheit oder der Granulatzuführung über die UP-Schnittstelle bewirken. Nach Abschluss des Schweißvorgangs wird der Prozess beendet (Prozessende 713). Ist hingegen keine UP-Kennlinie ausgewählt, wird der Prozess ohne Durchführung eines Schweißvorgangs beendet (Prozessende 715).

Mit dem Prozess 700 wird sichergestellt, dass, wenn die Schweißstromquelle auf die MSG-Schweißfunktion geschaltet ist, lediglich MSG-Kennlinien verwendet werden und lediglich die Drahtvorschubeinrichtung der MSG-Peripherie betrieben wird und dass, wenn die Schweißstromquelle auf die UP-Schweißfunktion geschaltet ist, lediglich UP-Kennlinien verwendet werden und lediglich die Drahtvorschubeinrichtung der UP-Peripherie betrieben wird.

### Bezugszeichenliste:

- 100, 200, 300: Schweißsystem
- 110, 210, 310, 410: Schweißstromquelle
- 111, 211, 311: Gehäuse
- 112, 212, 312, 412: Leistungsteil
- 113, 213, 313: Netzanschluss
- 114, 214, 314, 414: Steuereinrichtung
- 115, 215, 315, 415: Speicher
- 116, 216, 316, 416: Nutzerschnittstelle
- 120, 220, 320: MSG-Schnittstelle
- 121, 221, 321: UP-Schnittstelle
- 122, 222, 228, 322: Anschluss der MSG-Schnittstelle
- 123, 223, 229, 323: Anschluss der UP-Schnittstelle
- 124, 224, 324: Werkstückanschluss
- 125, 225, 225: Werkstückleitung
- 140, 240, 340: MSG-Peripherie
- 141, 241, 341: Verbindungsleitung
- 142, 242, 342: Drahtvorschubeinrichtung der MSG-Peripherie
- 143, 243, 343: Schlauchpaket
- 144, 244, 344: Schweißbrenner
- 145, 245, 345: Drahtelektrode
- 146, 246, 346: Schutzgasregelungseinrichtung
- 147, 247, 347: Schutzgasquelle
- 160, 260, 360: UP-Peripherie
- 161, 261, 361: Verbindungsleitung
- 162, 262, 362: Drahtvorschubeinrichtung der UP-Peripherie
- 164, 264, 364: UP-Schweißkopf
- 165, 265, 365: Drahtelektrode
- 166, 266, 366: Granulatzuführung
- 167, 267, 367: Granulatstrom
- 168, 268, 368: Bewegungseinheit
- 190, 290, 390: Werkstück
- 248, 348: Schweißrauchabsaugeinrichtung
- 249, 349: Absaugleitung
- 270,370: UP-Steuereinrichtung
- 332: Steuer-Schnittstelle
- 398: übergeordnete Steuerung
- 434: Mikroprozessor
- 435a-c: Speicherbereiche
- 436a: Gruppe von MSG-Kennlinien
- 436b: Gruppe von UP-Kennlinien
- 437a-b: MSG-Kennlinien
- 438a-b: UP-Kennlinien
- 500: Umschalt-Prozess
- 502: Nutzereingabe
- 504, 506, 510, 512: Schritte des Umschalt-Prozesses
- 508, 514: Prozessende des Umschalt-Prozesses
- 600: Auswahl-Prozess
- 602, 610, 611: Nutzereingabe
- 604, 606, 608, 609, 612, 613: Schritte des Auswahl-Prozesses
- 614, 615: Prozessende des Auswahl-Prozesses
- 700: Schweiß-Prozess
- 702: Steuerbefehl
- 704, 706, 708, 709, 710, 711: Schritte des Schweiß-Prozesses
- 712, 713, 714, 715: Prozessende

## Patentansprüche

1. Schweißstromquelle (110, 210, 310, 410) zum Lichtbogenschweißen mit abschmelzender Elektrode (145, 245, 345),
- mit einem Leistungsteil (112, 212, 312, 412), das zur Bereitstellung eines Ausgangsstroms zum Lichtbogenschweißen eingerichtet ist, und
- mit einer Steuereinrichtung (114, 214, 314, 414), die zur Steuerung der Schweißstromquelle (110, 210, 310, 410) eingerichtet ist,
**dadurch gekennzeichnet,**
- **dass** die Schweißstromquelle (110, 210, 310, 410) eine MSG-Schnittstelle (120, 220, 320) zum Anschließen von MSG-Peripherie (140, 240, 340) zum Metallschutzgasschweißen und eine UP-Schnittstelle (121, 221, 321) zum Anschließen von UP-Peripherie (160, 260, 360) zum Unterpulverschweißen aufweist,
- **dass** die Schweißstromquelle (110, 210, 310, 410) eine Metallschutzgasschweißfunktion und eine Unterpulverschweißfunktion zur Verfügung stellt, zwischen denen die Schweißstromquelle (110, 210, 310, 410) umschaltbar ist, und
- **dass** die Steuereinrichtung (114, 214, 314, 414) für die Metallschutzgasschweißfunktion dazu eingerichtet ist, die Schweißstromquelle (110, 210, 310, 410) derart zu steuern, dass unter Verwendung des Leistungsteils (112, 212, 312, 412) ein Ausgangsstrom zum Metallschutzgasschweißen über die MSG-Schnittstelle (120, 220, 320) bereitgestellt wird, und für die Unterpulverschweißfunktion dazu eingerichtet ist, die Schweißstromquelle (110, 210, 310, 410) derart zu steuern, dass unter Verwendung des Leistungsteils (112, 212, 312, 412) ein Ausgangsstrom zum Unterpulverschweißen über die UP-Schnittstelle (121, 221, 321) bereitgestellt wird.

2. Schweißstromquelle nach Anspruch 1,
**dadurch gekennzeichnet, dass** die MSG-Schnittstelle (120, 220, 320) zur Übermittlung von Steuersignalen an eine an die MSG-Schnittstelle (120, 220, 320) angeschlossene MSG-Peripherie (140, 240, 340), insbesondere an eine (142, 242, 342) Drahtvorschubeinrichtung der MSG-Peripherie (140, 240, 340), eingerichtet ist und/oder die UP-Schnittstelle (121, 221, 321) zur Übermittlung von Steuersignalen an eine an die UP-Schnittstelle (121, 221, 321) angeschlossene UP-Peripherie (160, 260, 360), insbesondere an eine Drahtvorschubeinrichtung (162, 262, 362) der UP-Peripherie (160, 260, 360), eingerichtet ist.

3. Schweißstromquelle nach Anspruch 1 oder 2,
**dadurch gekennzeichnet, dass** die Steuereinrichtung (114, 214, 314, 414) dazu eingerichtet ist, bei Ausgabe eines Ausgangsstroms zum Metallschutzgasschweißen über die MSG-Schnittstelle (120, 220, 320) die Ausgabe von Drahtvorschub-Steuersignalen zum Bewirken eines Drahtvorschubs einer Drahtvorschubeinrichtung (142, 242, 342) einer an die MSG-Schnittstelle (120, 220, 320) angeschlossenen MSG-Peripherie (140, 240, 340) zu bewirken und/oder bei Ausgabe eines Ausgangsstroms zum Unterpulverschweißen über die UP-Schnittstelle (121, 221, 321) die Ausgabe von Drahtvorschub-Steuersignalen zum Bewirken eines Drahtvorschubs einer Drahtvorschubeinrichtung (162, 262, 362) einer an die UP-Schnittstelle (121, 221, 321) angeschlossenen UP-Peripherie (160, 260, 360) zu bewirken.

4. Schweißstromquelle nach einem der Ansprüche 1 bis 3,
**dadurch gekennzeichnet,**
- **dass** die Steuereinrichtung (114, 214, 314, 414) für die Metallschutzgasschweißfunktion dazu eingerichtet ist, die Schweißstromquelle (110, 210, 310, 410) derart zu steuern, dass unter Verwendung des Leistungsteils (112, 212, 312, 412) ein Ausgangsstrom gemäß einer MSG-Kennlinie (M1, M2) für das Metallschutzgasschweißen über die MSG-Schnittstelle (120, 220, 320) bereitgestellt wird,
und/oder
- **dass** die Steuereinrichtung (114, 214, 314, 414) für die Unterpulverschweißfunktion dazu eingerichtet ist, die Schweißstromquelle (110, 210, 310, 410) derart zu steuern, dass unter Verwendung des Leistungsteils (112, 212, 312, 412) ein Ausgangsstrom gemäß einer UP-Kennlinie (U1, U2) für das Unterpulverschweißen über die UP-Schnittstelle (121, 221, 321) bereitgestellt wird.

5. Schweißstromquelle nach einem der Ansprüche 1 bis 4,
**dadurch gekennzeichnet,**
- **dass** die Schweißstromquelle (110, 210, 310, 410) einen Signaleingang aufweist und die Schweißstromquelle (110, 210, 310, 410) über ein über den Signaleingang empfangenes Umschaltsignal zwischen der Metallschutzgasschweißfunktion und der Unterpulverschweißfunktion umschaltbar ist
und/oder
- **dass** die Schweißstromquelle (110, 210, 310, 410) eine Nutzerschnittstelle (116, 216, 316, 416) aufweist und die Schweißstromquelle (110, 210, 310, 410) über eine Nutzereingabe (502) an der Nutzerschnittstelle (116, 216, 316, 416) zwischen der Metallschutzgasschweißfunktion und der Unterpulverschweißfunktion umschaltbar ist.

6. Schweißstromquelle nach einem der Ansprüche 1 bis 5,
**dadurch gekennzeichnet,**
- **dass** in einem Speicher (115, 215, 315, 415) der Schweißstromquelle (110, 210, 310, 410) ein oder mehrere MSG-Kennlinien (M1, M2) für das Metallschutzgasschweißen hinterlegt sind, die für die Metallschutzgasschweißfunktion und vorzugsweise nicht für die Unterpulverschweißfunktion auswählbar sind,
und/oder
- **dass** in einem Speicher (115, 215, 315, 415) der Schweißstromquelle (110, 210, 310, 410) ein oder mehrere UP-Kennlinien (U1, U2) für das Unterpulverschweißen hinterlegt sind, die für die Unterpulverschweißfunktion und vorzugsweise nicht für die Metallschutzgasschweißfunktion auswählbar sind.

7. Schweißstromquelle nach einem der Ansprüche 1 bis 6,
**dadurch gekennzeichnet, dass** die Steuereinrichtung (114, 214, 314, 414) dazu eingerichtet ist, die Schweißstromquelle (110, 210, 310, 410) derart zu steuern, dass ein Umschalten zwischen der Metallschutzgasschweißfunktion und der Unterpulverschweißfunktion während eines laufenden Schweißprozesses, insbesondere während der Ausgabe eines Ausgangsstroms und/oder während der Förderung einer Drahtelektrode (145, 245, 345; 165, 265, 365), blockiert ist.

8. Schweißstromquelle nach einem der Ansprüche 1 bis 7,
**dadurch gekennzeichnet,**
- **dass** die Steuereinrichtung (114, 214, 314, 414) dazu eingerichtet ist zu erkennen, ob an die MSG-Schnittstelle (120, 220, 320) eine MSG-Peripherie (140, 240, 340), insbesondere eine Drahtvorschubeinrichtung (142, 242, 342) der MSG-Peripherie (140, 240, 340), angeschlossen ist,
und/oder
- **dass** die Steuereinrichtung (114, 214, 314, 414) dazu eingerichtet ist zu erkennen, ob an die UP-Schnittstelle (121, 221, 321) eine UP-Peripherie (160, 260, 360), insbesondere eine Drahtvorschubeinrichtung (162, 262, 362) der UP-Peripherie (160, 260, 360), angeschlossen ist.

9. Schweißstromquelle nach einem der Ansprüche 1 bis 8,
**dadurch gekennzeichnet, dass** die MSG-Schnittstelle (120, 220, 320) und die UP-Schnittstelle (121, 221, 321) zueinander verschiedenartig ausgebildete Anschlüsse (122, 222, 228, 322; 123, 223, 229, 323), insbesondere zum Anschließen einer jeweiligen Drahtvorschubeinrichtung (142, 242, 342; 162, 262, 362) umfassen.

10. Schweißstromquelle nach einem der Ansprüche 1 bis 9,
**dadurch gekennzeichnet, dass** die Steuereinrichtung (114, 214, 314, 414) für die Unterpulverschweißfunktion dazu eingerichtet ist, die Schweißstromquelle (110, 210, 310, 410) derart zu steuern, dass unter Verwendung des Leistungsteils (112, 212, 312, 412) ein Ausgangsstrom gemäß einem UP-Schweißprogramm über die UP-Schnittstelle (121, 221, 321) bereitgestellt wird, wobei das UP-Schweißprogramm mindestens zwei Phasen mit verschiedenen Schweißparametern umfasst.

11. Schweißstromquelle nach einem der Ansprüche 1 bis 10,
**dadurch gekennzeichnet, dass** die Steuereinrichtung für die Metallschutzgasschweißfunktion und/oder für die UP-Schweißfunktion dazu eingerichtet ist, die Schweißstromquelle derart zu steuern, dass in einem Strompfad des Ausgangsstroms zum Metallschutzgasschweißen und/oder Unterpulverschweißen eine der Spannung des Leistungsteils entgegengerichtete Gleichspannung zugeschaltet wird.

12. Schweißstromquelle nach einem der Ansprüche 1 bis 11,
**dadurch gekennzeichnet, dass** die Schweißstromquelle (110, 210, 310, 410) eine Steuer-Schnittstelle (332) zum Anschluss einer übergeordneten Steuerung (398) aufweist, wobei die Steuereinrichtung (114, 214, 314, 414) dazu eingerichtet ist, über die Steuer-Schnittstelle (332) Steuersignale für eine Komponente der MSG-Peripherie (140, 240, 340), für eine Komponente der UP-Peripherie (160, 260, 360) und/oder für eine von der MSG-Peripherie (140, 240, 340) und UP-Peripherie (160, 260, 360) unabhängige Komponente auszugeben.

13. Schweißsystem (100, 200, 300),
- mit einer Schweißstromquelle (110, 210, 310, 410) nach einem der Ansprüche 1 bis 12,
- mit einer MSG-Peripherie (140, 240, 340) zum Metallschutzgasschweißen und
- mit einer UP-Peripherie (160, 260, 360) zum Unterpulverschweißen,
- wobei die MSG-Peripherie (140, 240, 340), insbesondere eine Drahtvorschubeinrichtung (142, 242, 342) der MSG-Peripherie (140, 240, 340), an die MSG-Schnittstelle (120, 220, 320) anschließbar oder angeschlossen ist und
- wobei die UP-Peripherie (160, 260, 360), insbesondere eine Drahtvorschubeinrichtung (162, 262, 362) der UP-Peripherie (160, 260, 360), an die UP-Schnittstelle (121, 221, 321) anschließbar oder angeschlossen ist.

14. Schweißverfahren unter Verwendung eines Schweißsystems (100, 200, 300) nach Anspruch 13,
- bei dem unter Verwendung der MSG-Peripherie (140, 240, 340) ein Metallschutzgasschweißvorgang durchgeführt wird und
- bei dem unter Verwendung der UP-Peripherie (160, 260, 360) ein Unterpulverschweißvorgang durchgeführt wird.
